(19) Europäisches Patentamt
European Patent Office
Office européen des brevets

(11) Publication number: 0 009 411 B2

(12) # NEW EUROPEAN PATENT SPECIFICATION

(45) Date of publication of the new patent specification: 26.11.86

(21) Application number: 79301973.8

(22) Date of filling: 21.09.79

(51) Int. Cl.⁴: G 03 C 5/54, C 08 F 26/06, C 08 F 226/02, C 08 F 220/54, C 08 F 228/02

(54) **Photographic recording material containing polymers which coordinate with metal ions.**

(30) Priority: 21.09.78 US 944477
13.11.78 US 960213

(43) Date of publication of application: 02.04.80 Bulletin 80/7

(45) Publication of the grant of the patent: 01.06.83 Bulletin 83/22

(45) Mention of the opposition decision: 26.11.86 Bulletin 86/48

(84) Designated Contracting States: BE CH DE FR GB

(56) References cited:
CH-A-429 442
CH-A-429 443
DE-A-2 728 557
DE-A-2 740 719
US-A-3 415 644
US-A-3 459 790
US-A-3 554 987
US-A-3 856 521

RESEARCH DISCLOSURE, September 10, 1978, Industrial Opportunies Ltd.; disclosure 17334, pages 76-84. Havant, Hampshire, GB "Metallizable dyes for diffusion transfer photography"
RESEARCH DISCLOSURE, November 1976; Industrial Opportunities, Ltd.; disclosure 15162, pages 75-87. Havant, Hampshire, GB "Photographic process and products"
K.B. Yatsimirskii, V.P. Vasilev, Instability

(73) Proprietor: EASTMAN KODAK COMPANY, 343 State Street, Rochester New York 14650 (US)

(72) Inventor: Archie, William Councill, Jr., Kodak Park, Rochester New York (US)
Inventor: Campbell, Gerald Allan, Kodak Park, Rochester New York (US)
Inventor: Petrak, Karel Ladislav, Kodak House Station Road, Hemel Hempstead Hertfordshire (GB)

(74) Representative: Baron, Paul Alexander Clifford, Kodak Limited Patent Department Headstone Drive, Harrow Middlesex HA1 4TY (GB)

(56) References cited: (continuation)
Constants of Complex Compounds, Pergamon Press, 1960, pages 142 and 162
K.J. Liu, H.P. Gregor, J. Phys. Chem. 69, 1952 (1965)

EP 0 009 411 B2

LIBER, STOCKHOLM 1986

**Description**

This invention relates to photographic recording material containing polymers which coordinate with metal ions.

Use of various dyes and dye-forming materials in photographic processes particularly in image transfer processes, is known. In many such cases dye image stability has been a problem. Dyes tend to wander from the image-receiving layer after processing. Also, dyes may undergo degradation during storage of the recording material prior to use. It is also recognized that dye images fade due to exposure to light over a period of time.

Use of metal complexes of some ortho substituted azo dyes in image-transfer processes is known to reduce fading. These metal-dye complexes have been found to be very light resistant.

Premetallized dyes are described in U.S. Patent 3,196,014 wherein dye developers preferably premetallized, are coated in the image-forming element of an image-transfer recording material and are released as a function of exposure and development. The released dye developers diffuse to an imagereceiving layer. In some instances, a metallic salt or complex can be in a receiving layer and the dye or dye-forming material can be metallizable rather than premetallized. That is, the dye or dye-forming material contains groups which will chelate with metal ions to form a metallized dye in the imagereceiving layer.

The metallizable dye approach generally has the advantage of faster diffusion as compared with the premetallized dye technique. Moreover, the metallizable approach provides the ability to use the metallization step as a dye hue shifting mechanism. It is advantageous to shift dye hues in color imagetransfer film units when the image dyes absorb radiation in regions of the spectrum to which the silver halide being used is sensitive. In such cases a loss of photographic speed results if the dye hues are not shifted.

Swiss Patent Specifications 429,442 and 429,443 describe dye image transfer systems in which an image of a metallizable mobile dye developer is transferred to a receiving sheet and there metallized, e.g. by an incorporated metal salt or metal chelate.

Research Disclosure No. 1 7334, September 10 1978, pages 76-84, describes dye image transfer systems in which a mobile matallizable image dye ia raleased and tranaferred to a receiving sheet where it can be metallized, e.g. by an Incorporated metal salt or chelate.

Metal ions coated in the receiving layer tend to diffuse out of the layer in which they were coated. This causes deleterious sensitometric effects in light-sensitive emulsion layers. There can also be an increase in access time for viewing a transferring image due to premature metallization of dyes in layers other than the receiving layer. The present invention solves these problems by the use of polymer having metal chelating groups which prevants unwanted migration of incorporated metal ions.

This invention provides an image transfer photographic recording material which comprises a support carrying thereon at least one layer containing a photosensitive silver halide emulsion having associated therewith a metallizable dye or metallizable dye forming material: a dye image-receiving layer containing a dye mordant: an alkaline processing composition and means for discharging same within said recording material in contact with said photosensitive layer; a silver halide developing agent: and polyvalent metal ions characterizad in that said material contains a polymer other than polyvinyl pyridine which contains such that a coordination complex of the polymer and the metal ions has a stability constant of from $10^{10}$ to $10^{18}$ the polymer being located in the mordant layer or in a layer adjacent thereto, and said metal ions being complexed by the polymer or located in a layer adjacent to said polymer layer in which case said polymer layer is located between said metal ions and said metallizable dye or metallizable dye forming material.

Photographic recording material of this invention effectively prevents diffusion of metal ions throughout the recording material but rapidly metallizes the dye-forming material in the vicinity of the mordant to provide a dye image with improved light stability.

Polymers useful in accordance with this invention have the formula:

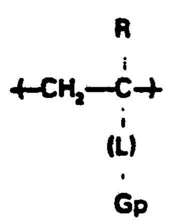

wherein:

R is H, halogen or an alkyl group containing from 1 to 6 carbon atoms;

L is a single bond or a bivalent linking group between the carbon atom and Gp, such as oxy; alkylene from 1 to 6 carbon atoms; arylene from 6 to 10 carbon atoms; arylenealkylene of from 7 to 12 carbon atoms; $-COOR^1-$ or $-CONHR^1-$, where $R^1$ is alkylene, arylene, or arylenealkylene as defined above: and

Gp is a group having one of the following formulae:

$—N(CH_2COOM)_2$;

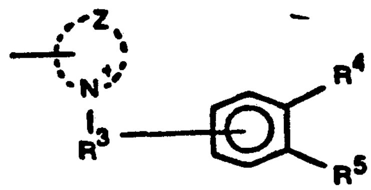

$X^-$;

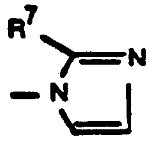

or

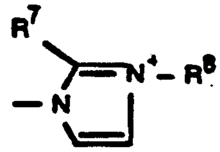

$X^-$

wherein:
M is H, an ammonium or an alkali metal ion;
Z represents the atoms necessary to complete a heterocyclic nucleus:
X is an anion; and
the various R groups are as defined below.

A polymer in accordance with this invention can comprise from about 5 to 100 weight percent of recurring units having the structure:

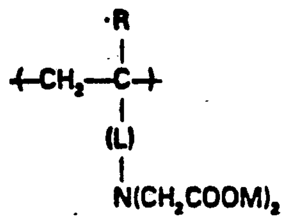

wherein:
R is H, halogen or an alkyl group containing from 1 to 6 carbon atoms;
L is a single bond or a bivalent linking group; and
M is H, an ammonium cation or an alkali metal ion.

The corresponding matal coordinate formed from the polymer described above has the structure:

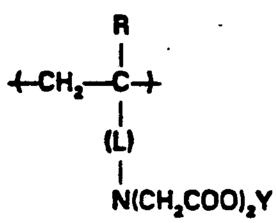

wherein:
Y is a metal such as described below; and
R and L are as described above.

Polymers having this structure can be preparad by polymerizing the monomer as described in Morris et al, J.A.C.S., 81, 377 (1959), and as furthar described in examples below.

Copolymers formed from N-vinylbenzyliminodiacetic acid and either acrylamide or anionic sulfonate monomers form stable, water-soluble or water-dispersible chelates with metal ions. These chalates can be used by coating a single layer rather than coating two or more layers. Such copolymers comprise units having the formula:

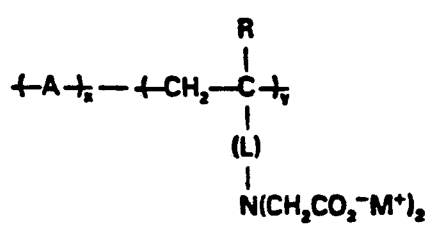

wherein:

A is one of the following units:

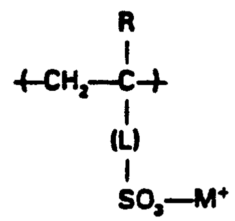

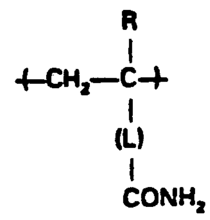

wherein:

R, L and M are as defined above;

x is from 20 to 95 percent by weight and preferably from 20 to 60 percent by weight; and

y is from 80 to 5 percent by weight and preferably from 20 to 40 percent by weight.

In a particularly preferred embodiment, the polymer also comprises units (-B-), wherein B is a recurring unit capable of mordanting photographic dyes and z is from 0 to 60 percent by weight, preferably from 0 to 40 percent by weight. (B) preferably comprises polymers having pendant tertiary or quaternary nitrogen groups such as vinylbenzyldimethylbenzylammonium chloride as described in U.S. Patent 3,958.995; vinylbenzyltrihexylammonium chloride as described in U.S Patent 3.898.088. and other quaternary ammonium salts such as described in U.S. Patents 3,758 445; 3,709,690; 3,788,855: 3,962,527; 3,625,694 and 3.868.252; materials such as described in U.S. Patent 3,557,066 and other cationic mordants such as described in U.S. Patent 3,488,706 and vinylimidazolium salts such as described in Research Disclosure 12045.

Preferred polymers are poly(acrylamide-co-vinyl-benzyliminodiacetic acid, disodium salt), poly(2-sodiosulfoethyl methacrylate-co-vinylbenzyliminodiacetic acid disodium salt).

The polymer, in most instances, is itself a dye mordant. However, an image-receiving layer comprising the polymer can also comprise an additional polymeric mordant for receiving the dye or dye-forming material. Preferred polymeric mordants include poly(vinylpyridine), poly(styrene-co-vinylbenzyl chioride-co-N-vinylbenzyl-N-benzyl-N,N-dimethylammonium chloride-co-divinylbenzene), poly(styrene-co-vinylbenzyl chloride-co-N-vinylbenzyl-N,N,N-trihexylammonium chloride) and poly-[styrene-co-N-(3-maleimidopropyl)-N-benzyl-N,N-diamethylammonium]chloride. The polymer of this invention is generally coated in the layer with a hydrophilic binder such as gelatin, polyacrylamides or poly(vinylpyrrolidone). The polymer can be in a concentration of 0.5 g/m$^2$ to about 8 g/m$^2$, and the dye receiving layer can be of a thickness preferably from about 0.5 to about 10 μm.

The above polymers can be prepared by merely polymerizing (A), and optionally (B), with the monomer

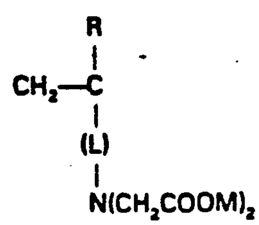

wherein:

R, L and M are as described above.

The polymerization can be carried out in a solvent or water and with or without a catalyst such as benzoyl peroxide. potassium persulfate, 2,2'-azobis (2-methylpropionitrile).

The metallized polymer comprises units having the formuia:

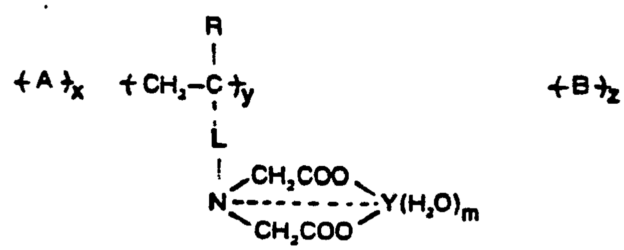

wherein:

A, B, R, L, x. y and z are as described above:
m is 1, 2 or 3: and
Y is a metal such as described below.

Preferred metallized polymers are nickel poly(2-sodio-sulfoethyl methacrylate-co-N-vinylbenzyliminodiacetic acid) (50:50), and nickel poly(acryiamide-co-vinylbenzyliminodiacetic acid) (80.20). nickel (II) chelate.

The metallized polymers are formed by merely adding the non-metallized polymer to a solution of a salt of metal ions such as a solution of a salt of the metal ions in water or a solvent such as methanol, ethanol, alcohol-water mixtures. Preferred sources of metal ions are water soluble salts such as watersoluble nickel chloride, acetate, sulfate and water-soluble copper chloride, acetate, sulfate.

Use of the terms "dye ligand" or "ligand forming material" includes also "metallizable dye", "ligand dye" or "chelating acid dye" as such terms are used herein.

Another class of polymers having ligand groups which coordinate with metal ions are active methylene group-containing polymers (having pendant

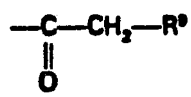

groups, wherein $R^9$ is cyano or another electron-withdrawing substituent such as

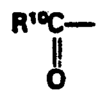

wherein $R^{10}$ is alkyl, alkoxy, aryloxy. aryl or aralkyl) wherein each alkyl group contains from 1 to 4 carbon atoms and each aryl group contains from 6 to 10 carbon atoms. Polymers containing these groups are described in U.S. Patents 3,459,790, 3,488,708, 3,554,987, 3,658,878, 3.929,482, 3,939,130, 2,865,893, 2,860,986 and 2,904,539.

Another polymer in accordance with this invention is a water-soluble polymer comprising a recurring unit of the formula:

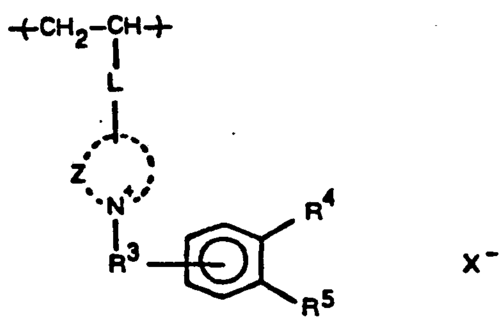

wherein:
L, Z and X are as described above;
$R^3$ is a single bond or an alkylene group; and
$R^4$ and $R^5$ are independently chelating groups.

Z represents the atoms necessary to complete nitrogen-containing heterocyclic nucleus, preferably containing from 5 to 7 members in the ring, such as pyridine; imidazole; quinoline; isoquinoline, phenanthridine; phenanthroline; pyrimidine; benzothiazole; benzothiadiazol; purine: pyrazine and acridine. The heterocyclic group can contain other hetero atoms, such as oxygen and sulfur, and can be substituted, such as vinylimidazole, methylimidazole. and picoline.

$R^3$ can be a single bond or alkylene, preferably containing from 1 to 4 carbon atoms, such as methylene, ethylene, isopropylene or butylene.

$R^4$ and $R^5$ are independently metal chelating groups (any group which will donate a pair of electrons to a metal ion) including a salt thereof (e.g., an alkali metal salt, a quaternary ammonium salt, etc.) or a hydrolyzable precursor thereof (e.g., a hydrolyzable acyl or ester group). e.g., hydroxy: amino; carboxy; sulfonamido; sulfamoyl; a hydrolyzable ester group having the formula $-OCOR_2$, $-OCOOR_2$, $-OCON(R^2)_2$ or $-COOR^2$, wherein $R^2$ is an alkyl group having from 1 to 4 carbon atoms or an aryl having from 6 to 8 carbon atoms.

Preferred chelating groups are -OH, -COOH, $-NHR^{11}$, $-NHCOR^{12}$, $-NHSO_2R^{13}$, $-C(R^{11})=O$, $-C(R^{11})=NR^{13}$ and $-SO_2NHR^{11}$, wherein $R^{11}$ is hydrogen or an alkyl group of from 1 to 6 carbon atoms; $R^{12}$ is an alkyl group of from 1 to 4 carbon atoms; $R^{13}$ is an alkyl group containing from 1 to 4 carbon atoms. aryl. preferably containing from 6 to 10 carbon atoms, including substituted aryl. or $NHR^{14}$, wherein $R^{14}$ is aryl containing from 6 to 10 carbon atoms or $-CONH_2$.

The polymer and metal ions in the receiving layer form a metallized polymer comprising a recurring unit of the formula:

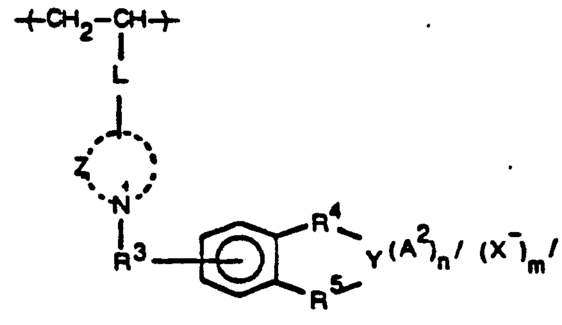

wherein:

L, Z, $R^3$, $R^4$, $R^5$, Y and X are as defined above;

n' is an integer of 1 to 4;

$A^2$ is a mono- or multidentate ligand; and

m, is 0 or an integer.

Copolymerized with the monomers described to form a polymer of the invention can be any α, βethylenically unsaturated monomer which is addition polymerizable Examples of such monomers are styrene, acrylic esters. such as methyl methacrylate. butyl acrylate. butyl methacrylate and ethyl acrylate: amides, such as acrylamide, diacetone acrylamide, N-methylacrylamide and methacrylamid: nitriles, such as acrylonitrile and vinylbenzylnitrile; ketones. such as methyl vinyl ketone, ethyl vinyl ketone and p-vinylacetophenone: halides, such as vinyl chloride. vinylidene chloride and vinylbenzyl chloride; ethers, such as methyl vinyl ether; ethyl vinyl ether and vinylbenzyl methyl ether: α, β-unsaturated acids thereof, such as acrylic acid, methacrylic acid and vinylbenzoic acid: olefins, such as ethylene, propylene and butylene; diolefins, such as butadiene and 2.3-dimethylbutadiene, and other vinyl monomers within the knowledge and skill of an ordinary worker in the art.

The polymer can comprise from 1 to 100 percent by weight of one or more mordanting units and from 0 to 99 percent by weight of the other polymerized ethylenically unsaturated monomer, preferably from 10 to 30 weight percent of mordanting units.

The monomer:

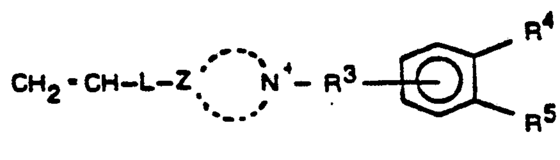

or a polymeric unit derived therefrom, which is polymerized to form the units of the polymer of this invention, can be prepared by quaternizing a compound. monomeric or polymeric, containing one or more pendant tertiary nitrogen-containing heterocyclic groups, such as those specified in the definition of Z above, with a compound of the formula:

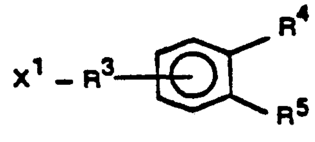

wherein:

$X^1$ is epoxy, halogen, such as chloro, bromo and iodo; toluensulfonate; and methansulfonate.

The quaternization reaction can be carried out under a variety of conditions, but usually is carried out by reacting the reagents in a suitable solvent, e.g., water, methanol or dimethylformamide at elevated temperatures, e.g., up to 100° C for several hours, e.g., 2 to 24 hours.

The polymer is formed by merely polymerizing the monomer or copolymerizing the monomers in a conventional manner, such as bulk. solution, suspension or emulsion polymerization techniques. Polymerization catalysts, such as 2,2'-azo-bis-12-methylpropionitrile), 4,4'-azo-bis-(4-cyanovaleric acid) and the like may be used, preferably in concentrations of from 1 to 5 mole percent and the polymerization can be carried out at temperatures such as 60 to 100°C and generally at any pressure.

Specifically in a most preferred embodiment, the polymer also contains mordant units according to the formula:

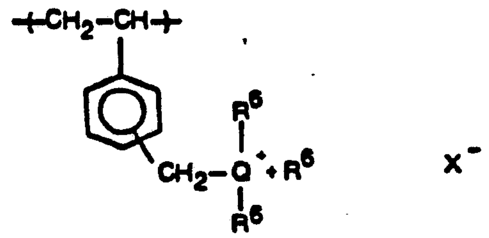

wherein:

Q is nitrogen or phosphorous, X is as defined above, and

$R^6$ is a cyclic or an alkyl group.

The most preferred polymer containing units, such as those having the formula above wherein two of $R^6$ are alkyl of 1 to 12 carbon atoms and the remaining $R^6$ is benzyl.

Another useful class of polymers of the inventlon which coordinate with metal ions are those which contain heterocyclic tertiary amine groups, such as triazole, tetrazole, pyrazole, imidazole, quinoline, pyrimidine, pyrrole, pyridazine, pyrazine, thiazoles, isothiazoles and thiazines. The preferred polymers are substituted or unsubstituted poly(vinylimidazole). The polymer is genarally coated in the layer wlth a hydrophilic binder, such as gelatin, poly(vinylalcohol), poly(acrylamide), poly(vinylpyrollidone) or hydroxyethyl cellulose. The polymer is preferably in a coverage of 0.54 to about 4.3 $g/m^2$, and the dye-receiving layer must be of a thickness which prevents diffusion of metal ions through the layer befora and during processing. Preferably, the thickness of the dye-receiving layer is from about 1 to about 8.4 µm.

Another useful class of polymera includes a partially quaternized vinylimidazole and a source of metal ions. Such polymers provide enhanced picture quality, the desirable shift of dye hues and exhibit improved dye stability when using conventional non-metallizing dyes as well as dye ligand or dye ligand forming materials.

Polymers of this type have recurring units:

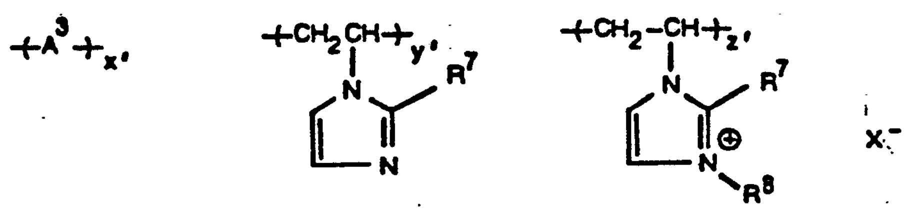

wherein:

X is as described above;

$A^3$ is a unit derived from an ehtylenically unsaturated monomer;

$R^7$ is H, alkyl or alkyl substituted with a metal coordinating group or salts thereof;

$R^8$ is alkyl or aralkyl;

x' is from 10 to 90 percent by weight;

y' is from 10 to 90 percent by weight; and

z' is from 0 to 40 percent by weight

said polymer or copolymer having associated therewith metal ions.

The copolymer comprises from about 10 to about 90 percent by weight of units of α, β-ethylenically unsaturated monomers. In a preferred embodiment the copolymer comprises from about 30 to about 70 percent by weight of the ethylenically unsaturated monomer.

$R^7$ is H, alkyl or alkyl substituted with a metal-coordinating group. The alkyl portion preferably contains from 1 to 12 carbon atoms such as methyl, propyl, isobutyl, hexyl or dodecyl. The alkyl can be substituted with a metal-coordinating, e.g., chelating group or salt thereof.

A metal-coordinating group as used herein is defined as a group which will form a coordinate bond with a metal, especially a transition metal. In preferred embodiments, more than one coordinating group is available to allow chelation of the metal and such pairs of groups are referred to as chelating groups.

Examples of metal chelating groups or salts of metal chelating groups which can be substituted on the alkyl group include hydroxy, carboxy, cyano, bis(carboxyalkyl)amino such as bis(carboxymethyl)amino, bis(cyanoalkyl)amino such as bis(cyanomethlyl)amino, and the ammonium of alkali metal salts of the carboxy-substituted alkyl groups such as socium potassium, lithium, ammonium and the like salts.

$R^8$ is alkyl preferably containing from 1 to 12 carbon atoms such as methyl, ethyl, siobutyl, hexyl or decyl, including substituted alkyl such as hydroxy, hydroxyethyl, hydroxypropyl, carboxalkyl and like substituents; and aralkyl containing from about 7 to 10 carbon atoms such as benzyl, phenethyl or p-chlorobenzyl.

In a preferred embodiment the vinylimidazole units comprise from 30 to 70 percent by weight (y' is 30 to 70 percent by weight) and the quaternized vinylimidazole units comprise from 5 to 20 percent by weight (z' is 5 to 20 percent by weight).

The copolymer is formed by any conventional copolymerization technique and can be carried out with or without a catalyst such as a potassium persulfate decomposition catalyst, a potassium persulfate-sodium bisulfite redox catalyst system, peroxides. e.g. benzoyl peroxide. azo catalysts, e,g. 2,2'-azobis(2-methylpropionitrile), and the like, preferably in a concentration of 0.5 to about 1.5 percent, based on total monomer, and at any temperature and pressure, but praferably at 60 to 120°C and approximately at atmospheric pressure. The polymerization is preferably carried out in a solvent such as dimethylformamide or N-methylpyrrolidone.

Polyvalent metal ions useful in this invention, when incorporated into the image-receiving element, react speedily with the released dye or dye-forming material to form a complex of the desired hue, and form a dye complex which is stable to heat, light and chemical reagents. Good results are obtained with polyvalent matal ions, such as copper (II), zinc (II), Nickel (II), platinum (II), palladium (II) and cobalt (II) ions. Most preferred are nickel (II) and copper (II).

The polyvalant metal ions which are coordinated to the polymer can be derived from any source of metal ions, such as a solution of a salt of the metal ions in water, or a solvent, such as methanol, ethanol or N,N-dimethylformamide. Preferred sources of metal ions are water-soluble salts, such as water-soluble nickel chloride, sulfate, nitrate, and water-soluble copper chloride, sulfate or nitrate.

The term coordination complex of the polymer and the metal ions as used herein refers to materials in which the chelating groups on the polymer are capable of sharing electron pairs with electrophilic, cationic metal atoms. The stability constant for the complex of a polymer and the metal ion is determined by measuring the concentrations of polymer ligand-metal complex, free polymer ligand, and free metal ion at a pH of about 5 or higher. and by applying the equations-

$$M + L = ML \qquad \beta_1 = \frac{[ML]}{[M][L]}$$

$$M + 2L = ML_2 \qquad \beta_2 = \frac{[ML_2]}{[M][L]^2}$$

$$M + 3L = ML_3 \qquad \beta_3 = \frac{[ML_3]}{[M][L]^3}$$

$$\vdots \qquad \vdots \qquad \vdots$$

$$M + NL = ML_N \qquad \beta_N \quad \frac{[ML_N]}{[M][L]^N}$$

wherein:

M is the concentration of the metal ion;

L is the concentration of the polymer ligand;

ML is the concentration of the polymer-metal complex;

N is the coordination number of the metal; and

β is the overall stability constant, as described in F. A. Cotton and G. Wilkinson, Advanced Inorganic Chemistry, Interscience, New York, 1967. The stability constant for a particular metal ion with a particular polymer containing coordinating groups can be found by quantifying the species mentioned above. In order to be effective, the stability constant of the polymer and metal ion must be from $10^{10}$ to $10^{18}$.

In the embodiment described above, the dye image-receiving layer may itself contain metal ions or the metal ions may be present in an adjacent layer, so that the dye or dye-forming matarial which is released will form a coordination complex therewith. The dye thus becomes immobilized in the dye image-receiving layer and metallized at the same time. The formation of the coordination complex may shift the absorption of the dye to the desired hue, usually to longer wavelengths, which have a different absorption than that of the initial dye-releasing compound. If this shift is large enough the dye-releasing compound may be incorporated in a silver halide emulsion layer without adversely affecting its sensitivity.

It is noted that a hue shift can also ba obtained by blocking chelating groups of the dyes. For instance, if OH is the chelating group, the group can be blocked with acetate or other blocking groups to form a hydrolyzable precursor. On development the dye is hydrolyzed and the hue shifts.

The metal ions and polymer when mixed together in solution form a coordination complex. The coordination reaction will proceed at any temperature and pressure and without the aid of a catalyst. The polymer-metal coordination complex, if soluble, can then be coated as a single layer on a photographic recording material in

any conventional coating manner such as coating in a solvent or water with a mordant to form an image-receiving layer. As an alternative, the source of metal ions can be coated in an adjacent (either next adjacent or in a further layer with easy access) layer to the polymer containing layer. The diffusing metal ions will coordinate to the polymer and will be prevented from wandering past the polymer containing layer. If the coordinated polymer-metal complex is insoluble, layers thereof are preferably prepared by first coating a solution of a soluble salt of the metal, then overcoating with a solution or dispersion of the polymer. While wet, the metal migrates to the polymer to form the insoluble complex in situ.

The metal to mordant molar ratio is generally from ~1:2 to ~1;50 and preferably ~1:5 to ~1:20.

It is noted that the metal ions need only be associated with the mordant layer and the polymer containing the coordinating groups. By "associated with" it is meant that the metal ions can be coated either in the same layer with the mordant and polymer containing coordinating groups or coated in an adjacent layer which can be either next adjacent or in a layer separated by one or more layers so long as the metal ions are coordinated with the polymer prior to the diffusion of the metallizable dye or metallizable dye forming material to the mordant.

If the metal ions are located between the polymer layer and the metallizable dye layer, they can diffuse to the metallizable dye layers causing severe image discrepancies, if the polymer containing coordinating groups is in a layer other than the layer containing the mordant, the diffusing metallizable dye must then form a more stable coordination complex or chelate with the metal than does the polymer in order for the dye to be metallized by the polymer-metal ion complex.

The metallized polymers and copolymers described above are useful in a photographic recording material comprising a support, a dye-image-receiving layer and at least one layer containing a dye or dye-forming material wherein the dye-image-receiving layer comprises these polymers. This recording material is most useful when the polymer also contains the recurring unit (B) as described above. In this form the recording material can be treated with a solution containing a source of metal ions prior to its use for receiving metallizable dyes.

In an embodiment of this invention, a dye or dye receiving element comprises a support having thereon a mordant layer comprising a metallized polymer described above. Although it is preferred that the polymer contains repeating units (B), a separate mordant polymer can be used if desired,

The layer containing the chelating polymer can be coated without binder or with any conventional binder. The binder to chelating polymer ratio can range from 10 to 0.1 and preferably from 4 to 0.25. The concentration of chelating polymer can range from 0.1 to 10 g/m$^2$ and preferably from 0.7 to 2.7 g/m$^2$ The metal ion concentration is generally 65-260 mg/m$^2$.

A binder for the metal salt can be used if it is coated separately from the chelating polymer, The binder for the metal salt can be any hydrophilic binder, such as gelatin, poly(acrylamide), poly(vinyl alcohol), poly(vinyl pyrrolidone) or hydroxyethyl cellulose. The metal salt, generally in a coverage of from about $10^{-4}$ to about $10^{-2}$ moles/m$^2$, binder and water can be mixed with a suitable surfactant, such as Surfactant 10G (trade mark) (p-isononylphenoxypolyglycidol) and coated as a layer using any convenient method of coating such as brush coating or roll coating. Although the thickness of the layer is not critical, the iayer is generally from about 0.4 µm to about 1.6 µm.

Basically, any mordant for the dyes or dye formers may be used in the image-receiving layer as long as the desired function of mordanting or otherwise fixing the dye images will be obtained. The particular material chosen will depend on the dye or dye-forming material to be mordanted. Suitable materials are disclosed on pages 80 through 82 of the November, 1976 edition of Research Disclosure. Although in most instances the mordant will be a separate material to bind the dyes, in some instances a polymeric mordant can be formed by copolymerizing a monomeric mordant with a metal-coordinating monomer, or the polymer coordinating with the metal ions can itself be a mordant for the dyes and dyeforming materials such as poly(vinylimidazole) poly(ethyleneimine) partially quaternized poly(vinylpyridine) or poly(vinylimidazole).

The metallizabla dye or dye-forming material is one which contains ligand groups (any group which will donate a pair of electrons to a metal ion), a salt thereof or a hydrolyzable precursor thereof, such as a quaternary ammonium salt of a chelating group or a hydrolyzable acyl group. Examples of these chelating groups are described above. Preferably, the dyes are multidentate ligands, i.e., they form chelates by coordinating with a metal ion on more than one site.

Generally, any metallizable dye containing chelating groups as described, or material which can provide chelating groups, will be useful herein as the metallizable dye or dye-forming material.

Useful image dye-forming materials include redox dye releasers containing dye moieties containing chelating groups or precursors thereof. Such dye-forming materials are disclosed in French Patent 2.364,492. The nondiffusible compounds having a releasable azo dye moiety generally can have the formula:

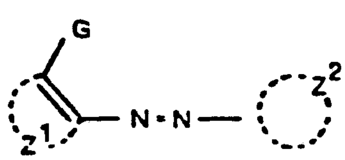

wherein:

$Z^1$ represents the atoms necessary to complete an aromatic carbocyclic or heterocyclic nucleus having at least one ring of 5 to 7 atoms. such as phenyl, pyridyl, naphthyl, pyrazolyl, indolyl;

$Z^2$ is an aromatic carbocyclic or heterocyclic nucleus having at least one ring of 5 to 7 atoms (e.g., the same nuclei as described above for $Z^1$), the $Z^2$ having, in a position adjacent to the point of attachment to the azo linkage, either

a) a nitrogen atom in the ring of the nucleus which acts as a chelating site, or

b) a carbon atom in the ring of the nucleus having directly attached thereto a nitrogen atom. which acts as a chelating site;

G is a metal chelating group such as described above for $R^4$ and $R^3$.

In the above formula, G can be either a monovalent group or a nitrogen atom as part of a heterocyclic ring fused to $Z^1$. In this later instance, the Z and G atoms can form a nucleus which is the same as the $Z^2$ nucleus.

There is great latitude in selecting a carrier moiety which is attached to the azo dye-releasing compounds described above. Depending upon the nature of the ballasted carrier selected, various groups may be needed to attach or link the carrier moiety to the azo dye. Such linking groups are considered to be a part of the ballasted carrier moiety. It should also be noted that when the dve moiety is released from the compound, cleavage may take place in such a position that part or all of a linking group, if one is present, and even part of the ballasted moiety, may be transferred to the imagereceiving layer along with the dye moiety. In any event, the azo dye nucleus as shown above can be thought of as the "minimum" which is transferred.

Ballasted carrier moieties useful herein are described in U.S. Patents 3.227,550; 3,628,952; 3.227,552: and 3,844,785 (dye released by chromogenic coupling); U.S. Patents 3,443,939 and 3.443.940 (dye released by intramolecular ring closure); U.S. Patents 3.698,897 and 3,725,062 (dye released from hydroquinone derivatives): U.S, Patent 3,728.113 (dye released from a hydroquinonylmethyl quaternary salt): U.S. Patents 3,719,489 and 3,443,941 (silver ion induced dye release); and U.S. Patents 3,245,789 and 3,980.497; Canadian Patent 602,607; British Patent 1,464,104; Research Disclosure 14447, April 1976: and German Offenlegungsschrift 2,809,716 (dye released by miscellaneous mechanism).

In a further embodiment, the ballasted carrier moiety or CAR as described above may be represented by the following formula:

(Ballast-Carrier-Link)—

wherein:

a) Ballast is an organic ballasting radical of such molecular size andconfiguration as to render the compound nondiffusible in a photographic element during development in an alkaline processing composition;

b) Carrier is an oxidizable acyclic, carbocyclic or heterocyclic moiety (see "The Theory of the Photographic Process", by C. E. K. Mees and T. H. James, Third Edition, 1966, pages 282 to 283), e.g, moieties containing atoms according to the following configuration:

$$(a)\left[C=C\right]_b$$

wherein

b is a positive integer of 1 to 2; and

a represents the radicals OH, SH, $NHR^2$ wherein $R^2$ is as earlier described, or hydrolyzable precursors thereof: and

c) Link represents a group which upon oxidation of said Carrier moiety is capable of being hydrolytically cleaved to release the diffusible azo dye. For example Link may be the following groups:

$\bullet NHSO_2$—, 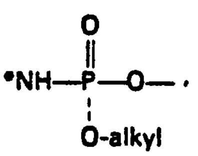 , 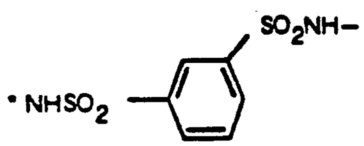

$\bullet NHSO_2(CH_2)_3NHSO_2$— , 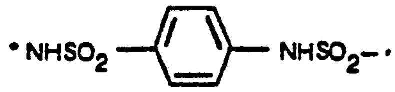 ,

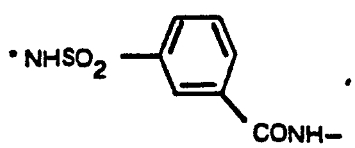 , 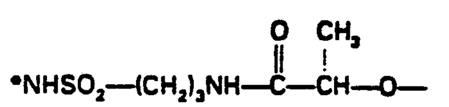

wherein:

* represents the position of attachment to Carrier.

The Ballast group in the above formula is not critical as long as it confers nondiffusibility to the compound. Typical Ballast groups include long-chain alkyl radicals linked directly or indirectly to the compound as well as aromatic radicals of the benzene and naphthalene series indirectly attached or fused directly to the carbocyclic or heterocyclic nucleus. etc. Useful ballast groups generally have at least 8 carbon atoms such as substituted or unsubstituted alkyl groups of 8 to 22 carbon atoms, a carbamoyl radical having 8 to 30 carbon atoms such as

$$—CONH(CH_2)_4—O—C_6H_3(C_5H_{11})_2,$$

$-CON(C_{12}H_{25})_2$, etc., a keto radical having 8 to 30 carbon atoms such as $-CO-C_{17}H_{35}$, $-CO-C_6H_4(t-C_{12}H_{25})$, etc.

For specific examples of Ballast-Carrier-Link moieties useful as the CAR moiety in this invention, reference is made to the November 1976 edition of Research Disclosure, pages 68 through 74, and the April 1977 edition of Research Disclosure, pages 32 through 39.

In a highly preferred embodiment of the invention, the ballasted carrier moiety or CAR in the above formulas is a group having the formula:

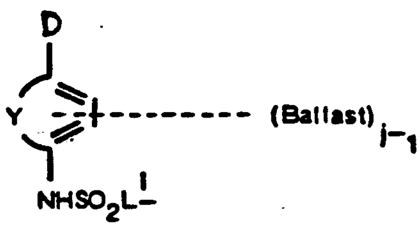

wherein:

a) Ballast is an organic ballasting radical of such molecular size and configuration (e.g., simple organic groups or polymeric groups) as to render the compound nondiffusible in a photographic element during development in an alkaline processing composition;

b) D is $OR^{15}$ or $NHR^{16}$ wherein $R^{15}$ is hydrogen or a hydrolyzable moiety and $R_{16}$ is hydrogen or a substituted or unsubstituted alkyl group of 1 to 22 carbon atoms such as methyl, ethyl, hydroxyethyl, propyl, butyl, secondary butyl, tert-butyl, cyclopropyl, 4-chlorobutyl, cyclobutyl, 4-nitroamyl, hexyl, cyclohexyl, octyl, decyl, octadecyl, dodecyl, or aryl such as benzyl, phenethyl, etc. (when $R^{16}$ is an alkyl group of greater than 8 carbon atoms, it can serve as a partial or sole Ballast);

c) $Y^1$ represents the atoms necessary to complete a benzene nucleus, a naphthalene nucleus, or a 5 to 7 membered heterocyclic ring such as pyrazolone, pyrimidine, etc;

d) j is a positive integer of 1 to 2 and is 2 when D is $OR^{15}$ or when $R^{16}$ is hydrogen or an alkyl group of less than 8 carbon atoms; and

a) $L^1$ is a linking group which is

$$[X^2—(NR^{11}—J)_n]_{m^2}— \text{ or } X^2—J—NR^{11}—$$

wherein:

i) $X^2$ represents a bivalent linking group of the formula-$R^{17}$-$L_n^2$-$R_p^{17}$- where each $R^{17}$ can be the same or different and each represents an alkylene radical having 1 to 8 carbon atoms, such as methylene, hexylene and the like; a phenylene radical; or a substituted phenylene radical having 6 to 9 cartion atoms. such as methoxy phenylene;

ii) $L^2$ represents a bivalent radical selected from oxy, carbonyl, carboxamido, carbamoyl, sulfonamido, ureylene, sulfamoyl, sulfinyl or sulfonyl;

iii) n is as defined above;

iv) p is 1 when n equals 1 and p is 1 or 0 when n equals 0, provided that when p is 1 the carbon content of the sum of both $R^{17}$ radicals does not exceed 14 carbon atoms;

v) $R^{11}$ is as defined above;

vi) J represents sulfonyl or carbonyl; and

vii) $m^2$ represents an integer of 0, 1 or 2.

Especially good results are obtained in the above formula when D is OH,j is 2,$Y^1$ is a naphthalene nucleus, and G is OH.

Examples of the CAR moiety in this highly preferred embodiment are disclosed in U.S. Patents 4,076,529; 3.928,312: French Patent 2.284,140; and German Patents 2.406,664; 2.613.005; and 2,505.248. and including the following:

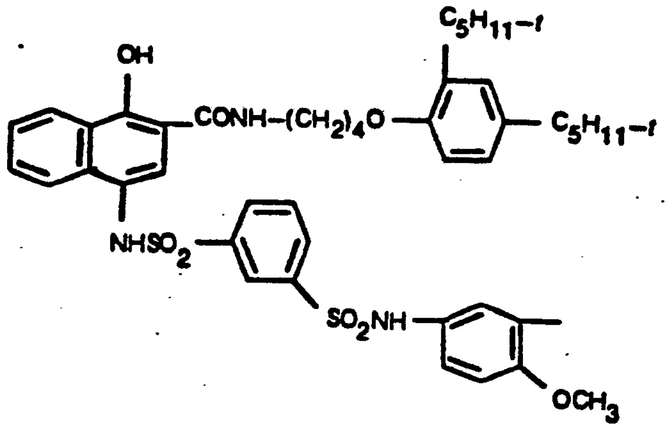

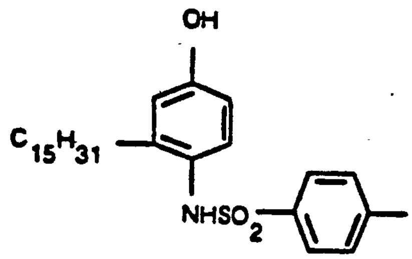

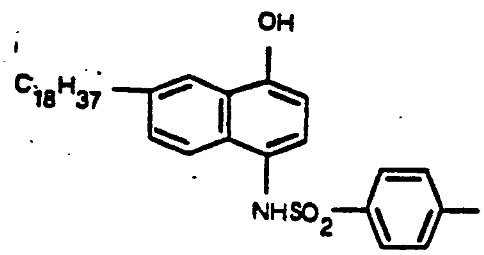

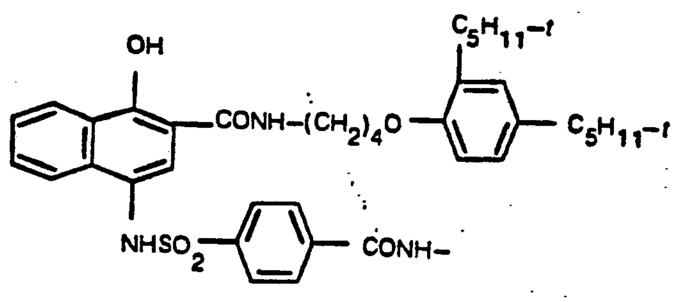

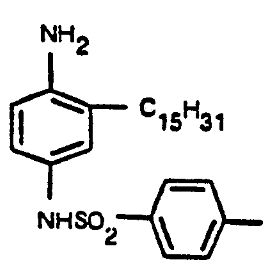

In another embodiment the ballasted carrier moiety or CAR in the above formulas is such that the diffusible azo dye is released as any inverse function of development of the silver halide emulsion layer under alkaline conditions. This is ordinarily referred to as positive-working dye-release chemistry. In one of these embodiments, the ballasted carrier moiety or CAR in the above formulas may be a group having the formula:

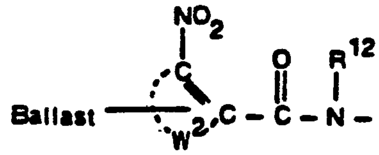

(I)

wherein:

Ballast is an organic ballasting radical of such molecular size and configuration as to render the compound nondiffusible in a photographic element during development in an alkaline processing composition;

$W^2$ represents at least the atoms necessary to complete a benzene nucleus (including various substituents thereon); and

$R^{12}$ is an alkyl group having from 1 to 4 carbon atoms.

Examples of this CAR moiety include the following:

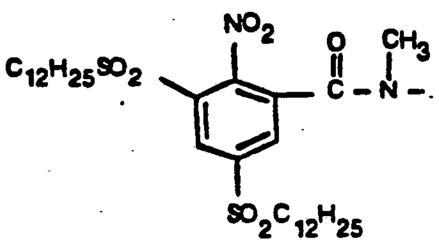

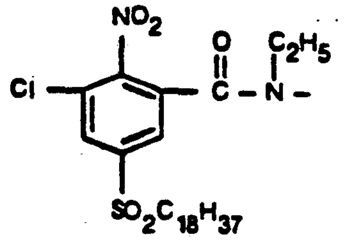

In a second embodiment of positive-working dye-release chemistry as referred to above, the ballasted carrier moiety or CAR in the above formulas may be a group having the formula:

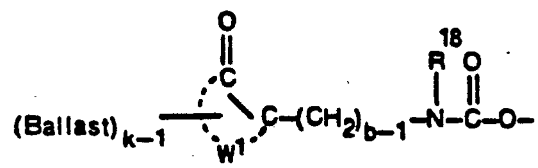

(II)

wherein:

Ballast is an organic ballasting radical of such molecular size and configuration as to render the compound nondiffusible in a photographic element during development in an alkaline processing composition;

$W^1$ represents at least the atoms necessary to complete a quinone nucleus (including various substituents thereon);

b is as defined above;

$R^{18}$ is an alkyl (including substituted alkyl) radical having 1 to about 40 carbon atoms or an aryl (including substituted aryl) radical having 6 to about 40 carbon atoms; and

k is a positive integer of 1 to 2 and is 2 when $R^{16}$ is a redical of less than 8 carbon atoms.

Examples of the CAR moiety in formula II include the following:

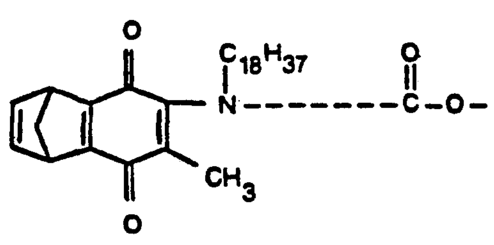

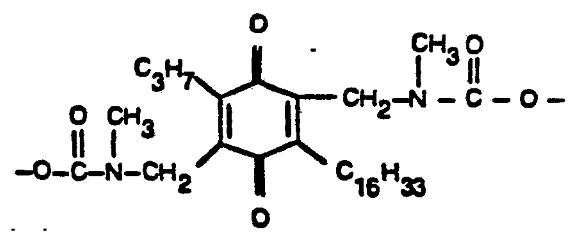

In using the compounds in formulas I and II above, they are employed in a photographic element similar to the other nondiffusible dye-releasers described previously. Upon reduction of the compound as a function of silver halide development under alkaline conditions, the metallizable azo dye is released. In this embodiment, conventional negative-working silver halide emulsions, as well as directpositive emulsions, can be employed. For further details concerning these panicular CAR moieties, including synthesis details, reference is made to German Offenlegungsschrift 2,809,716.

In a third embodiment of postive-working dye-release chemistry as referred to above, the ballasted carrier moiety or CAR in the above formulas may be a group having the formula:

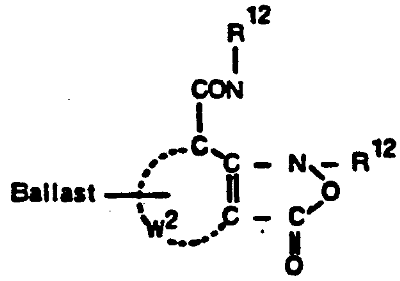

. (III)

wherein:
Ballast, $W^2$ and $R^{12}$ are as defined for formula 1 above.
Examples of the CAR moiety in formula III including the following:

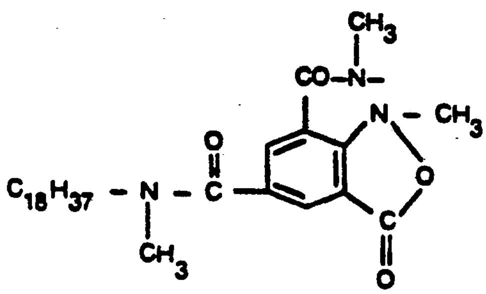

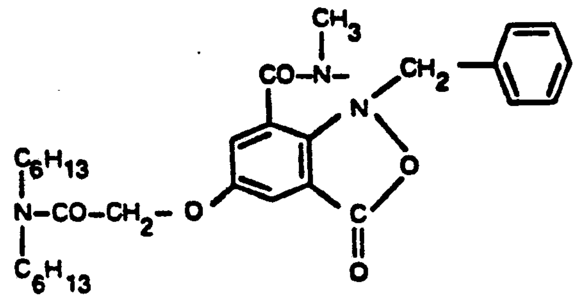

For further details concerning this particular CAR moiety, including synthesis details, reference is made to U S. Patent 3,980.479.

Representative metallizable dye or dye forming compounds useful in the invention include the following:

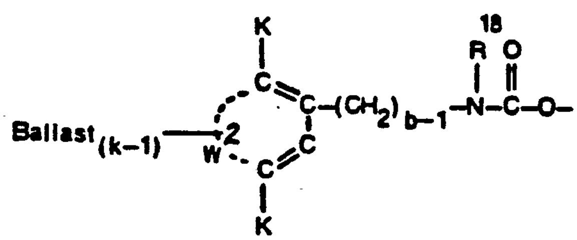

(IV)

wherein
Ballast, $W^2$, b, $R^{18}$ and k are as defined above; and
K is OH or a hydrolyzable precursor thereof.
Examples of the CAR moiety in formula IV include the following:

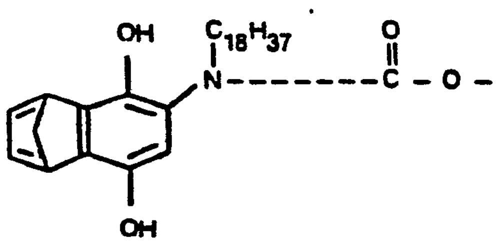

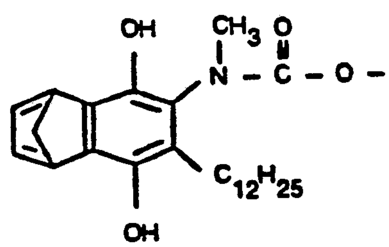

Representative metallizable dyes or metallizable dye forming compounds useful in the invention include the following:

1)

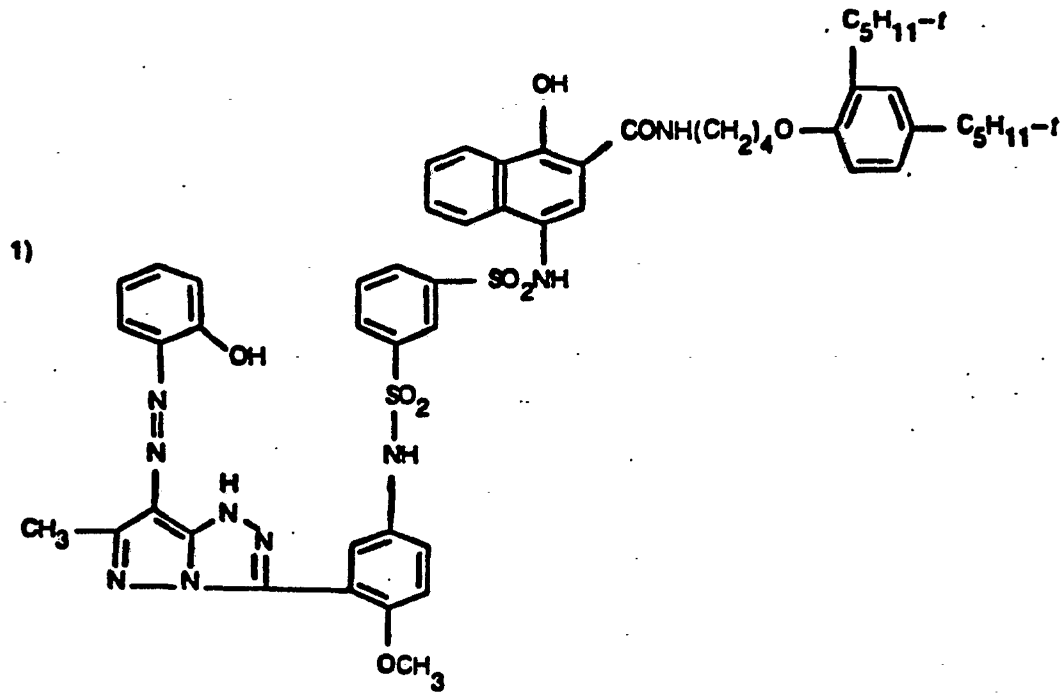

2)

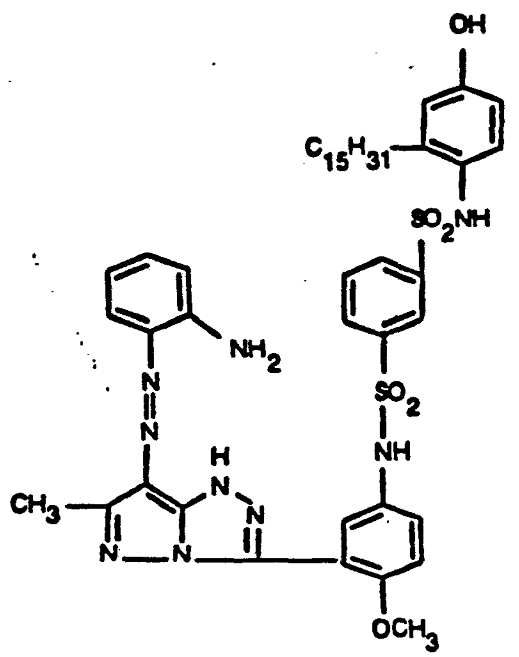

3)

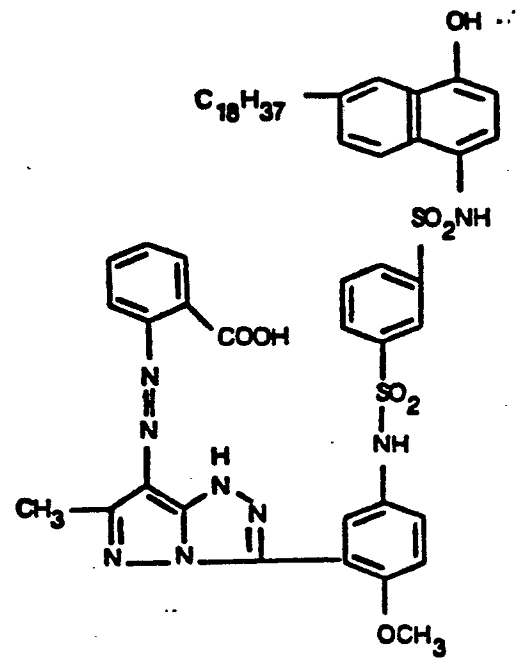

4)

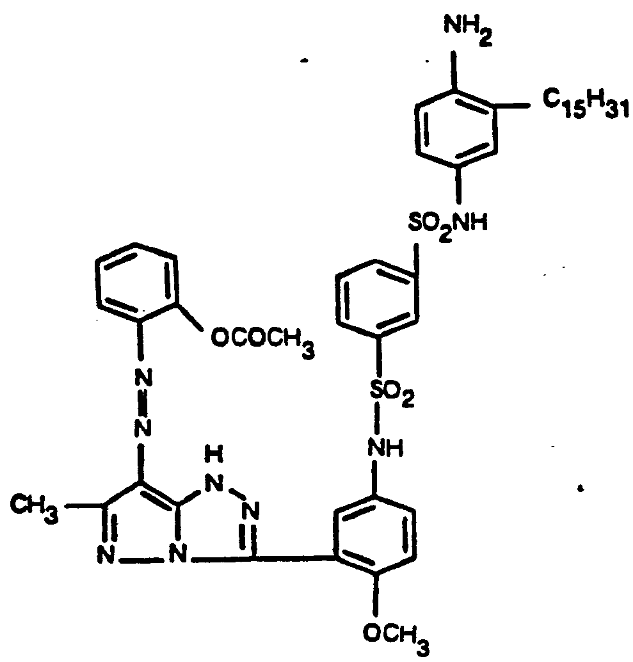

5)

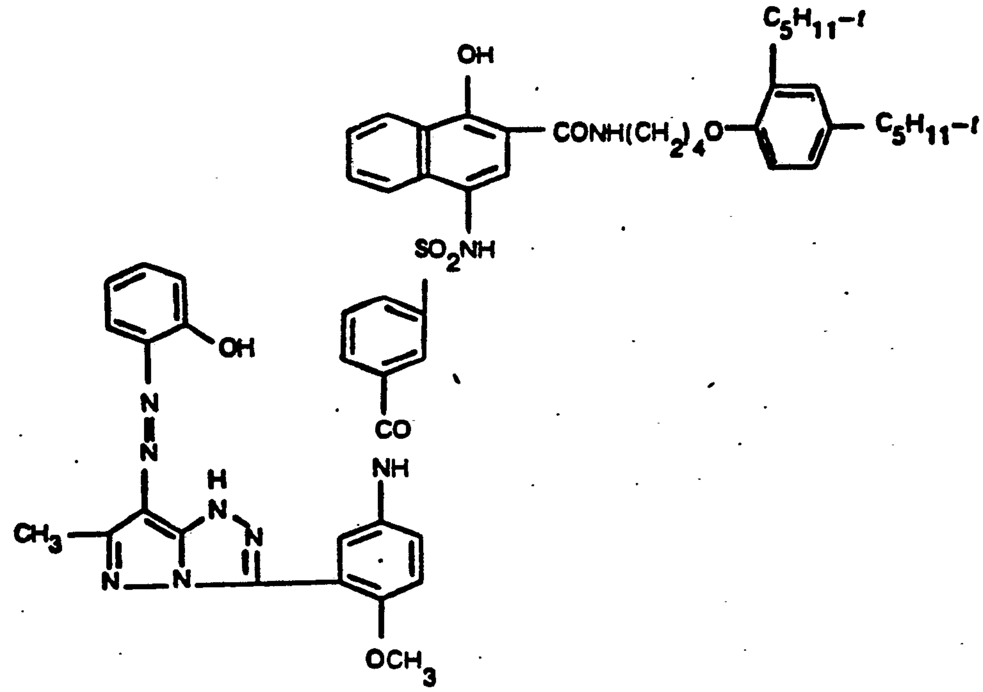

6)

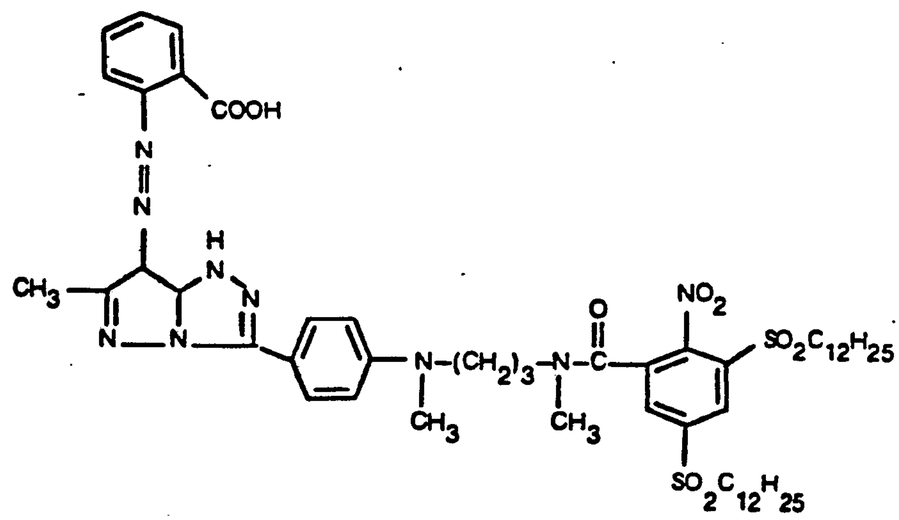

7)

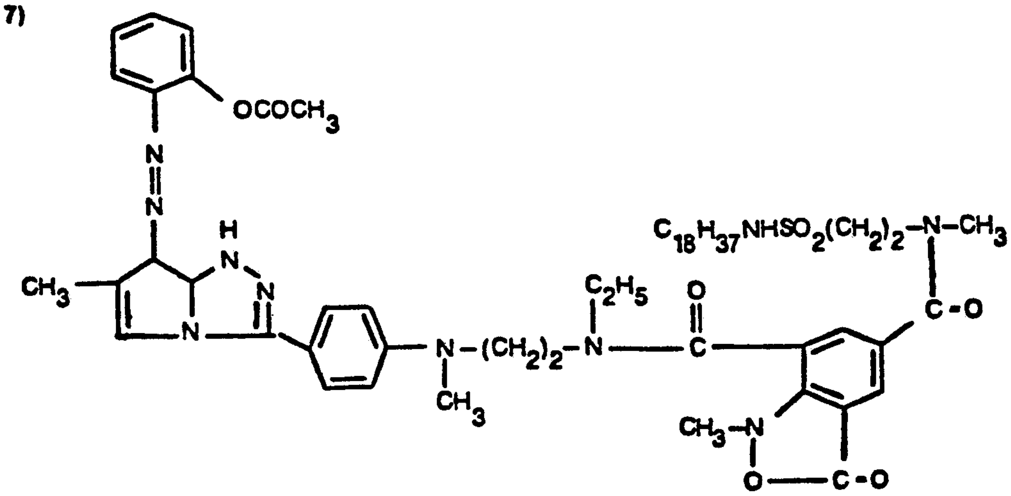

8)

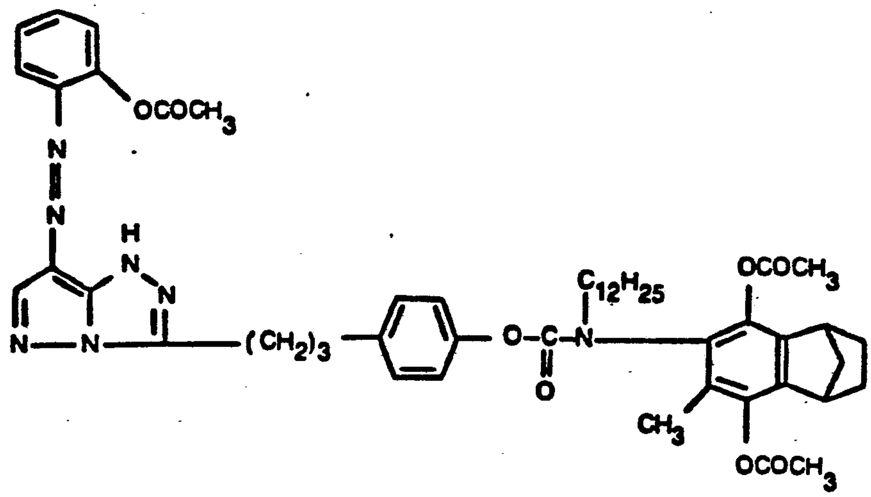

9)

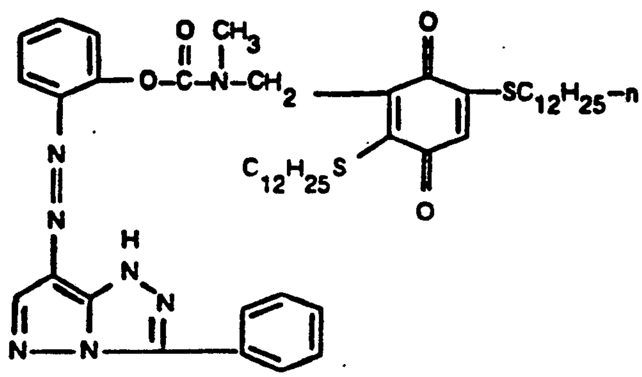

10)

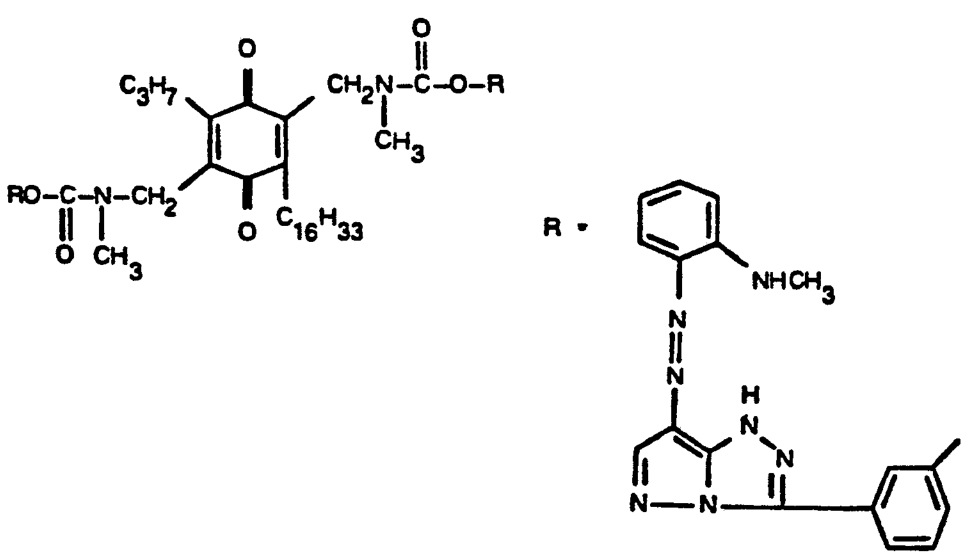

11)

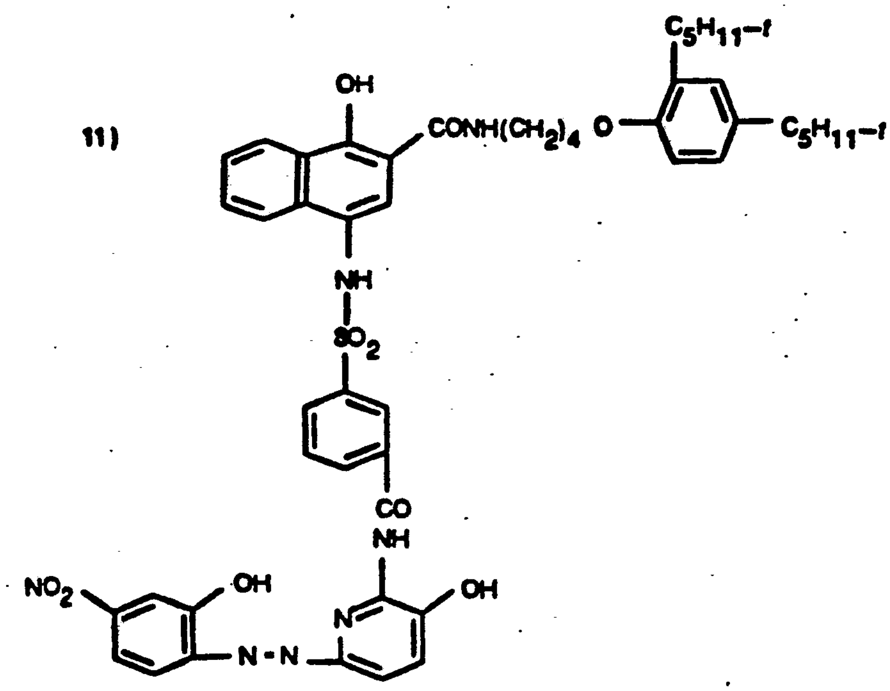

12)

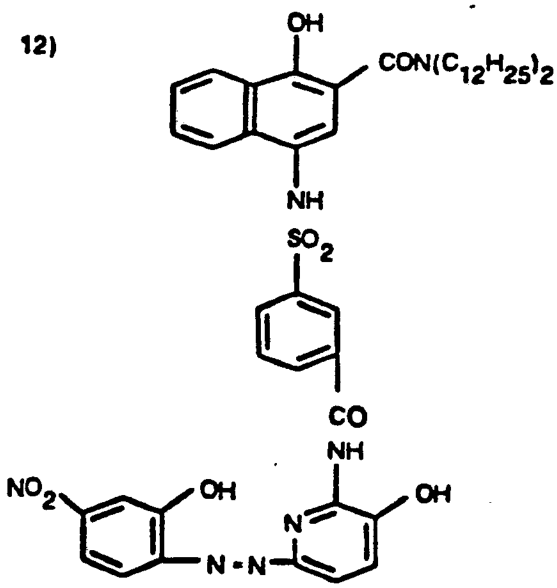

13)

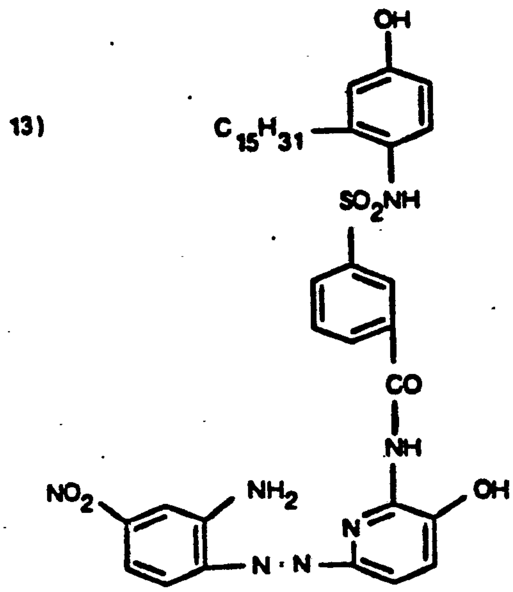

14)

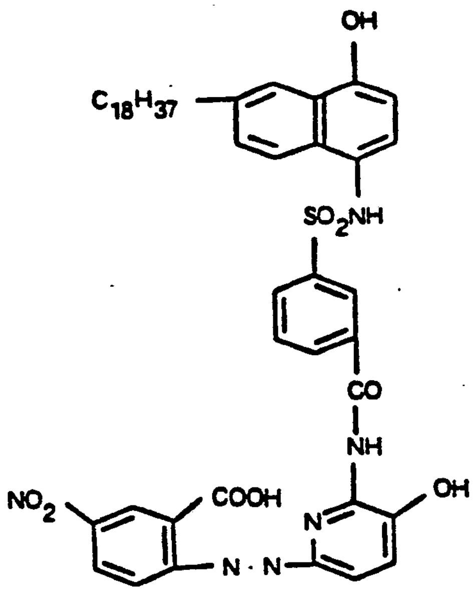

15)

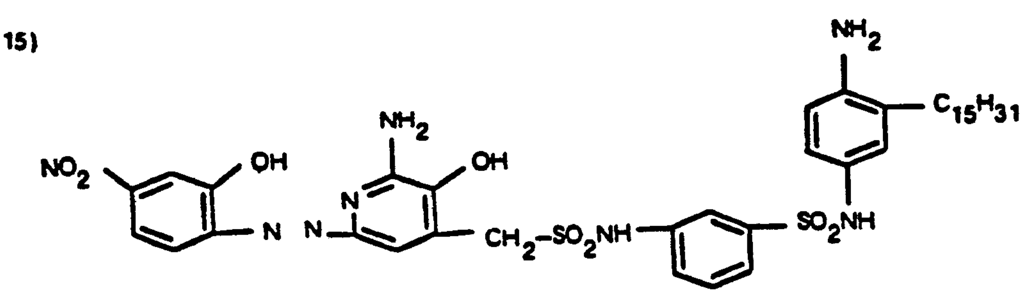

16)

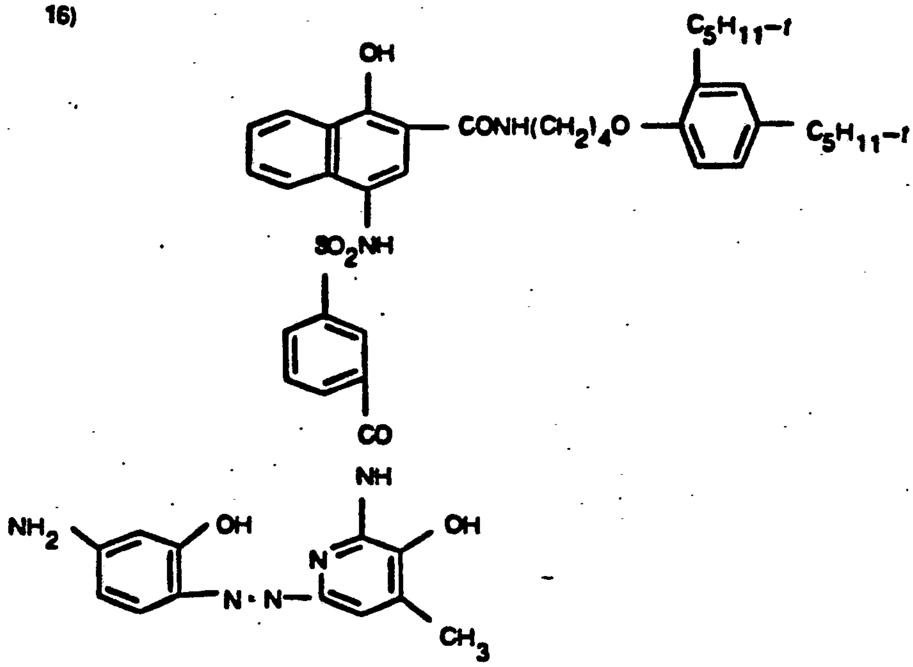

17)

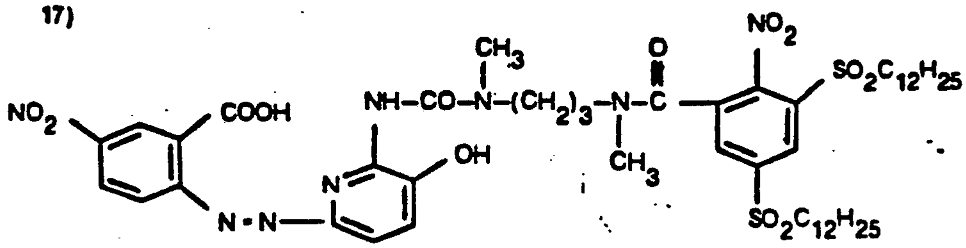

18)

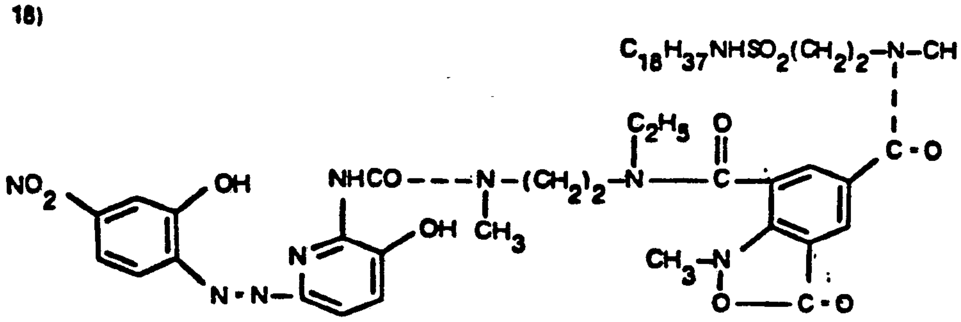

19)

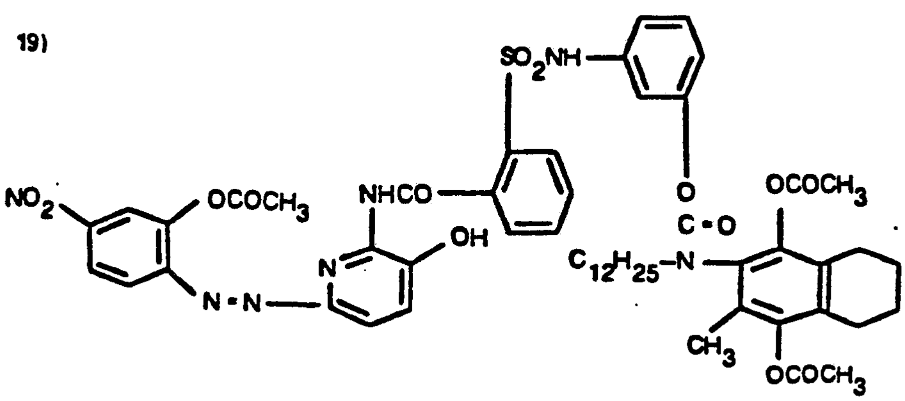

20)

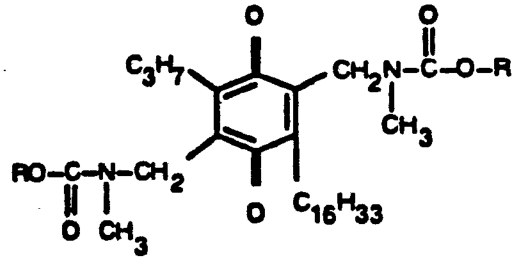

R =

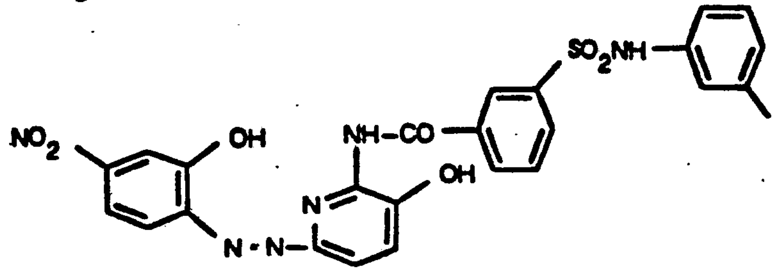

21)

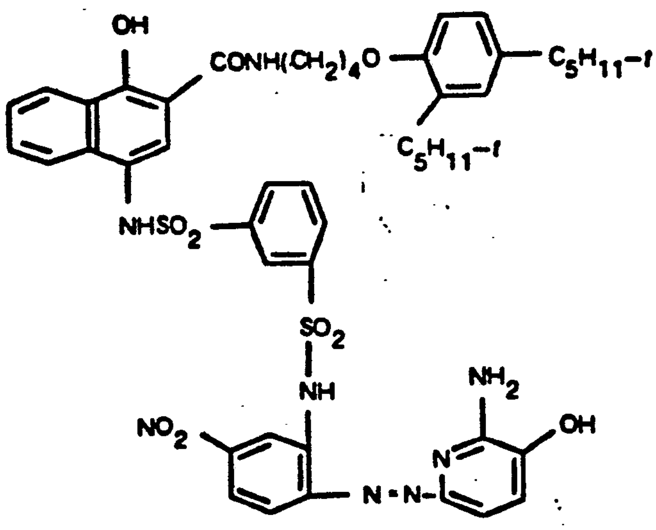

22)

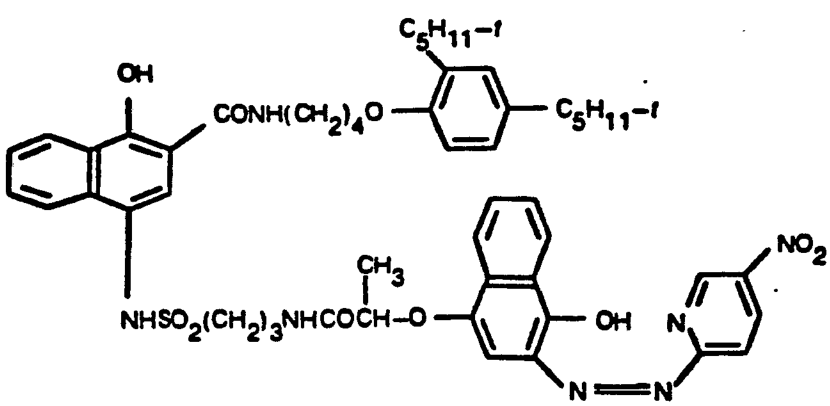

23)

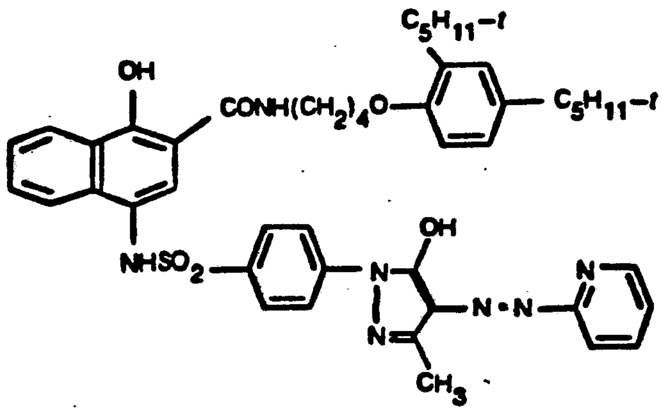

24)

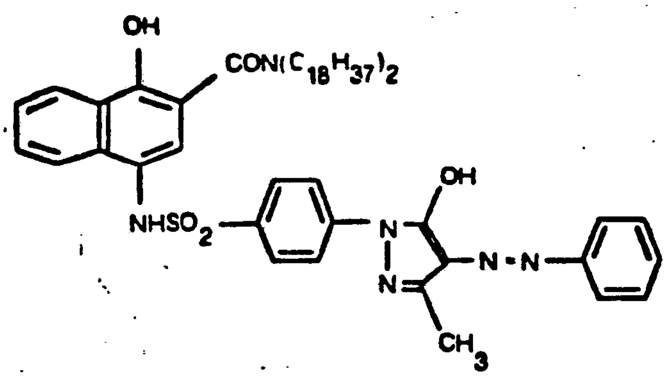

25)

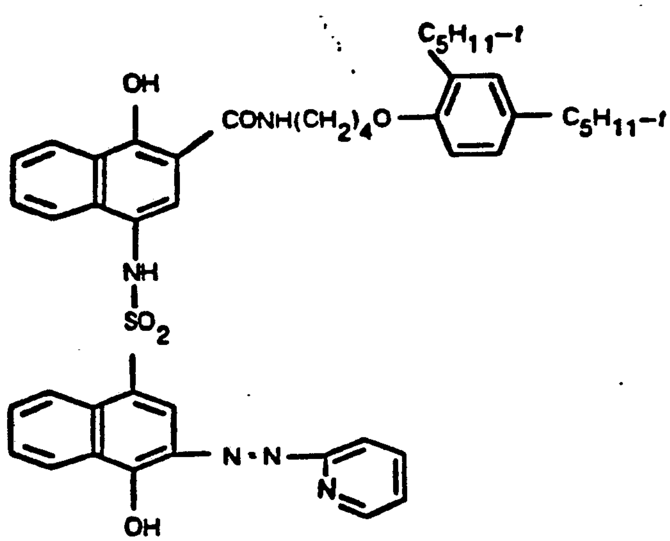

26)

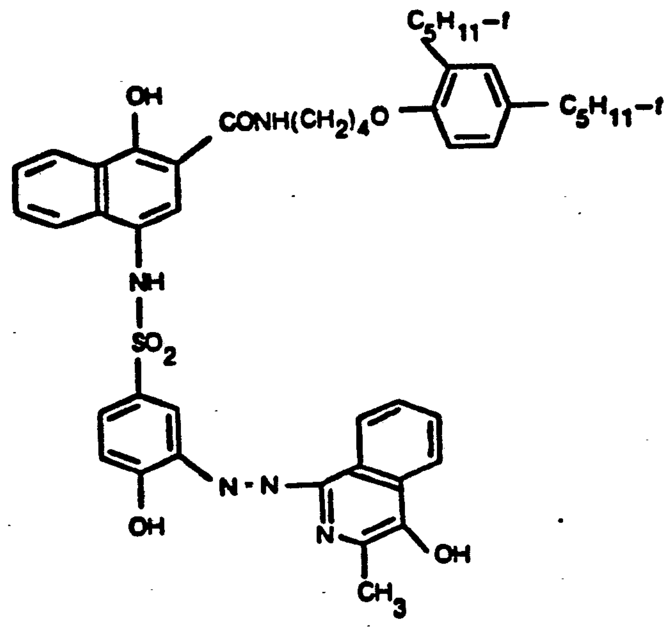

27)

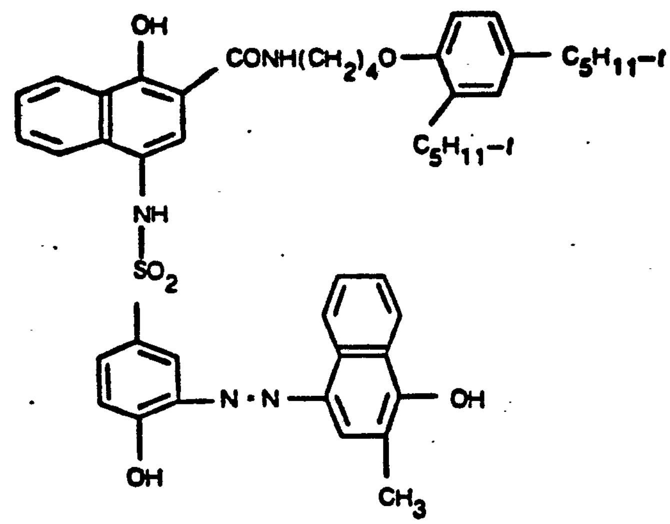

and

28)

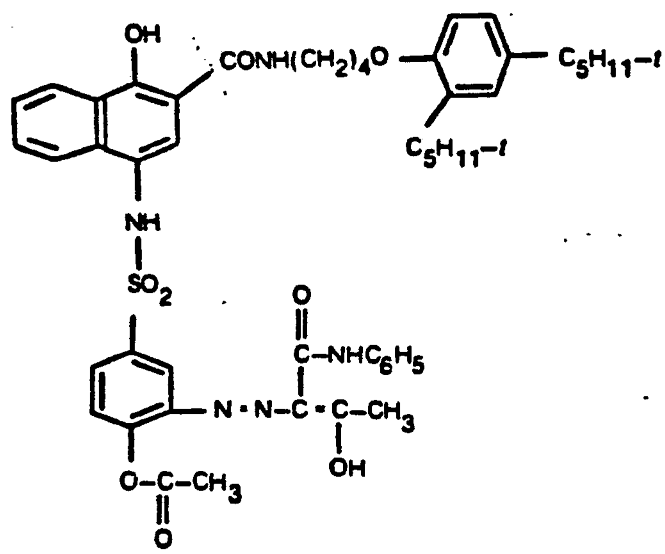

The image-receiving layer comprising the mordant has associated therewith a polymer containing ligand groups which form coordination complexes with metal ions such that the stability constant of a complex of the polymer and metal ions is at least $10^{10}$. The polymers which coordinate with the metal ions preferably form chelates with the metal ions. Polymers which form chelates with metal ions can contain ligand coordinating groups such as iminodiacetic acid, iminobis(cyanomethyl). o-hydroxybenzaldehyde, iminobis-(phosphonomethyl). β-diketone, β-ketoester and bipyridyl groups.

Other coordinating groups useful herein are cyclic amines, primary, secondary and tertiary amines, tertiary phosphines, mercaptans, thioureas, alcohols, ethers and the like. Exemplary chelating groups are iminodiacetic acid. ethylene diamine tetraacetic acid, o-hydroxybenzaldehyde, o-hydroxybenzoic acid, bipyridyl. iminobis(cyanomethyl) and the like.

Polymers containing such coordinating groups include those containing the repeating units

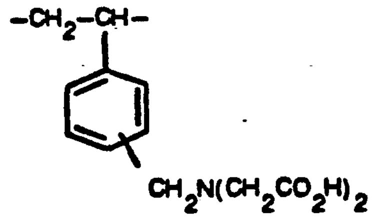

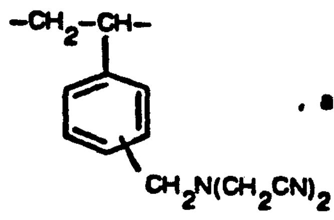

, and

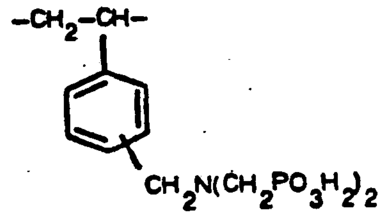

o-hydroxy-aldehyde polymers such as poly((N-vinylbenzyl-N,N-dimethyl-N-(3-formyl-4-hydroxybenzyl) ammonium chloride)) and the like; poly(vinylimidazoles) such as poly(N-vinylimidazole), poly(N-vinyl-2-methylimidazole), poly(N-vinyl-2-phenylimidazole) and the like: tertiary amine-containing polymers such as poly(N.N-dimethylaminoethyl methacrylate), poly(N-vinylbenzyl-N,N-dimethylamine) and the like; secondary amine-containing polymers such as poly(N-methyl-4-vinyl-aniline) and the like; primary amine-containing polymers such as poly(vinylaniline), poly(ethyleneimine), poly(2-aminoethyl methacrylate) and the like; and tertiary phosphine polymers such as poly(4-vinylphenyldiphenyl phosphine) and the like.

The photographic recording material above-described can be treated with an alkaline processing composition to effect or initiate development in any manner. A preferred method for applying processing composition is by use of a rupturable container or pod which contains the composition. In general, the processing composition employed in this invention contains the developing agent for development, although the composition could simply be an alkaline solution where the developer is incorporated in the photographic recording material, in which case the alkaline solution serves to activate the incorporated developer.

The photographic recording material can be processed by passing it between a pair of juxtaposed pressure-applying members, such as would be found in a camera designed for in-camera processing.

It will be appreciated that, after processing the photographic recording material there remains in it, after transfer has taken place, an imagewise distribution of the metallizable dye in addition to developed silver. A color image comprising residual non-diffusible compound may be obtained in this recording material if the residual silver and silver halide are removed by any conventional manner well known to those skilled in the photographic art, such as a bleach bath followed by a fix bath or a bleachfix bath. Such a retained dye image can normally be treated with metal ions to metallize the dyes to increase their light fastness and to shift their spectral absorption to the intended region.

The dye image-receiving layer in the above-described material can be located on a separate support adapted to be superposed on the photographic layer after exposure thereof. Such image-receiving layers are generally disclosed, for example, in US. Patent 3,362,819. When the means for discharging the processing composition is a rupturable container, it is usually positioned in relation to the photosensitive layer and the image-receiving layer so that a compressive force applied to the container by pressure-applying members, such as would be found in a typical camera used for incamera processing, will effect a discharge of the container's contents between the image-receiving layer and the outermost layer of the photographic element. After processing, the dye image-receiving layer is separated from the photographic element.

The dye image-receiving layer in the above-described film unit can also be located integral with the photographic element between the support and the lowermost photosensitive silver halide emulsion layer. One useful format for integral receiver-negative photographic elements is disclosed in Belgian Patent 757,960. Another format for integral negative-receiver photographic elements in which the present invention can be employed is disclosed in Belgian Patent 757,959.

Still other useful integral formats in which this invention can be employed are described in U.S. Patents 3,415,644; 3,415,645, 3,415.646: 3,647,437; and 3,635,707. In most of these formats, a photosensitive silver halide emulsion is coated on an opaque support and a dye image-receiving layer is located on a separate transparent support superposed over the layer outermost from the opaque support. In addition, this transparent support also preferably contains a neutralizing layer and a timing layer underneath the dye image-receiving layer.

The photographic recording material of the present invention may be used to produce positive images in single or multicolors. In a preferred three-color system, each silver halide emulsion layer of the film assembly will have associated therewith a dye-forming compound which releases a dye ligand which, in its metallized form, possesses a predominant spectral absorption within the region of the visible spectrum to which said

silver halide emulsion is sensitive (initially or after forming the coordination complex), i.e., the blue-sensitive silver halide emulsion layer will have a yellow dyeforming material associated therewith, the green-sensitive silver halide emulsion layer will have a magenta dye-forming material associated therewith. and the red-sensitive silver halide emulsion layer will have a cyan dye-forming material associated therewith, at least one of the dye or dye-forming materials being a compound in accordance with the present invention. The dye-forming material associated with each silver halide emulsion layer may be contained either in the silver halide emulsion layer itself or in a layer contiguous to the silver halide emulsion layer.

The concentration of dye or dye-forming compounds that can be employed in the present invention may be varied over a wide range, depending upon the particular compound employed and the results which are desired. For example, dyes or dye formers may be coated in layers by using coating solutions containing between about 0.5 and about 8 percent by weight of the dye or dye former distributed in a hydrophilic film-forming natural material or synthetic polymer, such as gelatin, poly(vinyl alcohol), etc. which is adapted to be permeated by aqueous alkaline processing composition,

Depending upon which CAR is used in the dye-releasing compound a variety of silver halide developing agents can be employed. In certain embodiments of the invention, any silver halide developing agent can be employed as long as it cross-oxidizes with the dye-releasers described herein. The developer may be employed in the photosensitive element to be activated by the alkaline processing composition. Specific examples of developers which can be employed in this invention include:

N-methylaminophenol
Phenidone (1 -phenyl-3-pyrazolidone)
Dimezone (1 -phenyl-4,4-dimethyl-3-pyrazolidone)
aminophenols
1 -phenyl-4- methyl-4-hydroxymethyl-3-pyrazolidone
N,N-diethyl-p-phenylenediamine
N,N,N',N'-tetramethyl-p-phenylenediamine
3-methyl-N.N-diethyl-p-phenylenediamine
3-methoxy-N-ethyl-N-ethoxy-p-phenylenediamine, etc.

The non-chromogenic developers in this list are preferred, however, since they avoid any propensity of staining the dye image-receiving layer.

In one of the preferred embodiments of the invention, the silver halide developer employed in the process becomes oxidized upon development and reduces silver halide to silver metal. The oxidized developer then cross-oxidizes the dye-releasing compound. The product of cross-oxidation then undergoes alkaline hydrolysis, thus releasing an imagewise distribution of diffusible azo dye which then diffuses to the receiving layer to provide the dye image. The diffusible moiety is transferrable in alkaline processing composition either by virtue of its self-diffusivity or by having attached to it one or more solubilizing groups. for example, a carboxy, sulpho, sulphonamido. hydroxy or morpholino group.

In using dye-releasing compounds which produce diffusible dye images as a function of development, either conventional negative-working or direct-positive silver halide emulsions may be employed. If the silver halide emulsion employed is a direct-positive silver halide emulsion, such as an unfogged, internal-image emulsion designed for use in the internal image reversal process or a fogged, direct-positive emulsion such as a solarizing emulsion, which is developable in unexposed areas, a positive image can be obtained in certain embodiments on the dye image-receiving layer. After exposure of the film unit, the alkaline processing composition parmeates the various layers to initiate development of the exposed photosensitive silver halide emulsion layers. The developing agent present in the film unit develops each of the silver halide emulsion layers in the unexposed areas (since the silver halide emulsions are direct-positive ones), thus causing the developing agent to become oxidized imagewise corresponding to the unexposed areas of the direct-positive silver halide emulsion layers. The oxidized developing agent then cross-oxidizes the dye-releasing compounds and the oxidized form of the compounds then undergoes a base-catalyzed reaction to release the dyes imagewise as a function of the imagewise exposure of each of the silver halide emulsion layers. At least a portion of the imagewise distributions of diffusible dyes diffuse to the image-receiving layer to form a positive image of the original subject. After being contacted by the alkaline processing composition, a pH-lowering layer in the film unit or image-receiving unit lowers the pH of the film unit or image receiver to stabilize the image.

Internal-image silver halide emulsions useful in this invention are described more fully in the November 1976 edition of Research Disclosure, pages 76 through 79.

The rupturable container employed in certain embodiments of this invention can be of the type disclosed in U.S. Patents 2,543,181; 2,643,886; 2,653,732; 2,723.051; 3,056,492: 3,056,491 and 3,152,515.

Generelly speaking, except where noted otherwise, the silver halide emulsion layers employed in the invention comprise photosensitive silver halide dispersed in gelatin and are about 0.6 to 6 microns in thickness; the dye or dye formers are dispersed in an aqueous alkaline solution-permeable polymeric binder, such as gelatin, as a separate layer about 0.2 to 7 μm in thickness: and the alkaline solutionpermeable polymeric interlayers, e.g., gelatin, are about 0.2 to 5 μm in thickness. Of course. these thicknesses are approximate only and can be modified according to the product desired.

Use of a pH-lowering material in the film units employed in this invention will usually increase the stability of the transferred image. Generally, the pH-lowering material will effect a reduction in the pH of the image layer

from about 13 or 14 to at least 11 and preferably 5 to 8 within a short time after imbibition. Suitable materials and their functioning are disclosed on pages 22 and 23 of the July 1974 edition of Research Disclosure and pages 35 through 37 of the July 1975 edition of Research Disclosure.

A timing or inert spacer layer can be employed in the practice of this invention over the pH-lowering layer which "times" or controls the pH reduction as a function of the rate at which alkali diffuses through the inert spacer layer. Examples of such timing layers and their functioning are disclosed in the Research Disclosure articles mentioned in the paragraph above concerning pH-lowering layers.

The alkaline processing composition employed in this invention is the conventional aqueous solution of an alkaline material. Suitable materials and addenda frequently added to such compositions are disclosed on pages 79 and 80 of the November 1976 edition of Research Disclosure.

The silver halide emulsions useful in this invention, both negative-working and direct-positive ones, are well known to those skilled in the art and are described in Product Licensing Index, Volume 92, December 1971, publication 9232.

The term "nondiffusing" used herein has the meaning commonly applied to the term in photography and denotes materials that for all practical purposes do not migrate nor wander through organic colloid layers such as gelatin in an alkaline medium, in the photographic elements of the invention and preferably when processed in a medium having a pH of 1 1 or greater.The same meaning is to be attached to the term"immobile". The term"diffusible" as applied to the materials of this invention has the converse meaning and denotes materials having the property of diffusing effectively through the colloid layers of the photographic elements in an alkaline medium in the presence of "nondiffusing" materials. "Mobile" has the same meaning.

The following examples are presented for a further understanding of the invention.

**Example 1**

Poly(N-vinylbenzyliminodiacetic acid disodium salt)

A slurry of 100 g of N-vinylbenzyliminodiacetic acid in 1 1 of water was adjusted to pH 5.5 by the addition of 50% sodium hydroxide solution. The resultant solution was decolorized by stirring with 1 g of activated carbon for 15 minutes. The carbon was removed by filtration and 500 mg of potassium persulfate was added. The solution was then flushed with nitrogen and heated at 60°C overnight. The polymer solution was enclosed in cellulose bags and dialyzed against distilled water for 6 hours. Freeze drying the dialysate gave 100 g of product.

Anal. calcd. for $C_{13}H_{13}NO_4Na$: C, 57.8; H, 9.8; H, 5.2; Na, 8.5.

Found: C, 56.1; H, 5.3; H, 5.2; Na, 8.2.

$[\eta]_{0.1N\ NaCl}$ = 1.63 measured at 25°C.

**Example 2**

Poly(N-vinylbenzyliminodiacetic acid disodium salt-co-sodium acrylate) $(1{:}1)_w$

A mixture of 30 g of acrylic acid and 30 g of N-vinylbenzyliminodiacetic acid in 500 ml of water was adjusted to pH 5.5 by the addition of 50% sodium hydroxide solution and the resultant solution was decolorized by stirring with 1 gram of activated carbon. The carbon was removed by filtration and 300 mg of potassium persulfate was added. The solution was then flushed with nitrogen and heated at 60°C overnight. The polymer solution was enclosed in cellulose bags and dialyzed for 6 hours. Freeze drying gave 58 g of product.

**Example 3**

Poly(N-vinylbenzyliminodiacetic acid-co-4-vinylpyridine) $(1{:}1)_w$

A slurry of 15 g of N-vinylbenzyliminodiacetic acid in 270 ml of water was adjusted to pH 5.5 by the addition of 50% sodium hydroxide solution. To the resultant solution was added 15 g of distilled 4-vinylpyridine and 150 mg of potassium persulfate. The solution was then purged with $N_2$ and stirred at 60°C overnight. A viscous solution was formed which was diluted up to one liter with water, encased in cellulose bags, and dialyzed for 24 hours. The polymer was isolated by freeze drying the dialysate.

Yield = 26 g.

Anal. Found: C, 62.1; H, 5.8; N, 8.1.

$[\eta]_{0.1\ N\ NaCl}$ = 1.29 measured at 25°C.

**Example 4**

Poly(acrylamide-co-N-vinylbenzyliminodiacetic acid disodium salt) (80:20)

A slurry of 10 g of N-vinylbenzyliminodiacetic acid in 350 ml of water was adjusted to pH 5.5 by the addition of 50% sodium hydroxide solution. To the resultant solution was added 100 ml of ethanol, 40 g of acrylamide, and 250 mg of potassium persulfate. The reaction was then flushed with nitrogen and heated at 60°C overnight. The viscous polymer solution was diluted with 835 rnl of water, and one third was dialyzed overnight. The dialysate was freeze dried to yield 16 g of product.

Anal. Found: C, 47.1; H, 6.6; N, 14.8.

$[\eta]_{0.1\ N\ NaCl} = 1.31$ measured at 25°C.

To another one third portion of the above crude polymer solution (13.4 meq chelate sites) was added dropwise 13.4 ml of 1 N nickel (II) chloride which had been diluted to 40 ml with water. A polymeric chelate separated in the form of a dispersion. The particle size of the nickel chalate dispersion was less than 1μ. The dispersion was dialyzed overnight to remove uncomplexed nickel. The purified dispersion was found to contain 6.2 mg of nickel per ml of solution at 6.1% solids.

**Example 5**

Poly(N-vinylbenzyliminodiacetic acid disodium salt-co-N-vinylimidazole) $(1:1)_w$

A slurry of 5.0 g of N-vinylbenzyliminodiacetic acid in 90 ml of water was adjustad to pH 5.5 by the addition of 50% sodium hydroxide solution. To the resultant solution was added 5 g of N-vinylirnidazole and a solution of 50 mg of 2,2'-azobis[2-methylpropionitrile] in 5 ml of acatone. The reaction vessel was purged with nitrogen and stirred at 60°C overnight. The viscous polymer solution was then diluted with 250 ml of water and dialyzed overnight. Freeze drying gave 9 g of product.

Anal. Found: C, 54.7; H. 4.9; N, 10.8.

$[\eta]_{1\ N\ NaCl} = 1.67$ measured at 25°C.

**Example 6**

Poly(sodium 2-sulfoethyl methacrylate-co-N-vinylbenzyliminodiacetic acid nickel(II) chelate) $(1:1)_w$

A slurry of 40 g of N-vinylbenzyliminodiacetic acid in 720 ml of water was adjusted to pH 5.5 by the addition of 50% sodium hydroxide solution. To the resultant solution was added 44.6 g of sodium 2-sulfoethyl methacrylata and 800 mg of potassium persulfate. The reaction vessel was purged with nitrogen and the solution was stirred at 60°C overnight. The polymer dope was diluted with 1340 ml of water and a solution of 162 ml of 1 N nickel (II) chloride solution that had been diluted to 535 ml with water was added dropwise. A soluble, light green polymeric chelate was formed. The solution was dialyzed overnight to remove uncomplexed nickel ions and was then concentrated to 7.6% solids. It was determined by atomic absorption spectroscopy that the sample contained 7.04 mg of nickel per ml of solution.

**Example 7**

Comparative Example

To evaluate the effect of mobile copper ion on dye diffusion in a simulated image transfer process, model image receiving elements, with and without copper sulfate, were prepared by coating a poly(ethylene terephthalata) film support with:

1) a dye mordant layer comprising poly(divinylbenzene-co-styrene-co-N-benzyl-N,N-dimethyl-N-vinylbenzylammonium chloride) (1:49.5:49.5 by weight) mordant at 2.16 g/m$^2$ and gelatin at 3.24 g/m$^2$;

2) a white reflecting layer comprising titanium dioxide at 23.76 g/m$^2$ and gelatin at 2.38 g/m$^2$;

3) an overcoat layer comprising gelatin at 4.32 g/m$^2$.

Receiver A - as above

Receiver B - as above except that the dye mordant layer (layer 1) also contained $CuSO_4.H_20$ at 0.29 g/m$^2$

A viscous dye solution consisting of 30 ml of 0.5 N sodium hydroxide. 0.9 g of hydroxyathyl cellulose and 54 mg of 4-(2.4-dihydroxyphenylazo)-3-naphthol-1 -sulfonic acid (a diffusible, metallizable magenta dye) was spread betwean samples of the model receivers and a processing cover sheet comprising a poly(ethylene terephthalate) film support having coated thereon:

1) a polyacrylic acid neutralizing layer;

2) a timing layer containing a mixture of callulose acetate and poly(styrene-co-maleic anhydride).

The diffusion of the dye to the mordant layer was monitored by measuring the reflaction density to green light as a function of time. The percant of the final $D_{max}$ at various times is expressed below for each model

receiver. In addition, spectrophotometric measurements were made on the sample to determine the absorption spectrurn of the dye and the effect of copper ion on absorption.

| | % $D_{max}$ | | | | |
|---|---|---|---|---|---|
| | 30 sec. | 60 sec. | 120 sec. | $D_{max}$ | $\lambda_{max}$ |
| Receiver A | 46 | 70 | 89 | 1.40 | 495 |
| Receiver B | 23 | 40 | 55 | 1.77 | 545 |

This example demonstrates that a substantial reduction in diffusion rate was observed in a receiver element containing copper sulfate. It is seen that the free copper ion was at least partially mobile in the gelatin medium, and the slower diffusion was due to the interception of the dye ligand by the copper ion which had migrated to the reflecting layer and the overcoat layer of the receiver, i.e. layers 2 and 3. Moreover, the spectrophotomatric curves of the dye transferred to the samples of Receiver A and B indicate that the copper ion was successful in complexing with the dye, as shown by the shift of the maximum absorption ($\lambda_{max}$) from 495 to 545 nm and the increasa in $D_{max}$ from 1.40 to 1.77. Further evidence of metallization was obtained by dipping the sample of Receiver A containing the dye in a solution of copper sulfate to produce a spectrophotometric curve similar to that produced in Receiver B.

**Example 8**

Immobilization of Copper Ion

Image-receiving elements containing the polymer synthesized in Example 1 were prepared according to the following schematic structures (quantities in brackets are in g/m²):

*Receiver C (control)*

| | |
|---|---|
| Layer 3 | $TiO_2$ (23.76); Gelatin (2.38) |
| Layer 2 | Gelatin (4.32) |
| Layer 1 | Polymeric mordant of Example 7 (non-chelating) (2.16) Gelatin (3.24) |
| | /// Poly(ethylene terephthalate) /// |

*Receiver D*

| | |
|---|---|
| Layer 3 | $TiO_2$ (23.76); Gelatin (2.38) |
| Layer 2 | Polymer of Example 1 (0.69) (chelating) $CuSO_4 \cdot H_2O$ (0.29)* Gelatin (4.32) |
| Layer 1 | Polymeric mordant of Example 7 (2.16) Gelatin (3.24) |
| | /// Poly(ethylene terephthalate) /// |

* The $CuSO_4H_2O$ was coated in a separate step on top of the wet polymer (Example 1) layer.

*Receiver E*

| | |
|---|---|
| Layer 3 | Polymer as Example 1 (0.69); $CuSO_4 \cdot H_2O$ (0.29)* Gelatin (4.32) |
| Layer 2 | $TiO_2$ (23.76); Gelatin (2.38) |
| Layer 1 | Polymeric mordant of Example 7 (2.16) Gelatin (3.24) |
| | /// Poly(ethylene terephthalate) /// |

| | % $D_{max}$ | | | | |
|---|---|---|---|---|---|
| | 30 sec. | 60 sec. | 120 sec. | $D_{max}$ | $\lambda_{max}$ |
| Receiver C | 59 | 82 | 98 | 1.44 | 495 |
| Receiver D | 54 | 71 | 79 | 1.75 | 545 |
| Receiver E | 8 | 17 | 36 | 1.78 | 545 |

From the above data, it is apparent that the immobilization of copper ion by complexation with a polymer according to this invantion (Receiver E) resulted in considerable reduction of the dye diffusion rate as compared to Receivers C and D. When the polymer-copper complex was brought to the top of tha receiver structure (Receiver E), very low diffusion rates were observed, indicating poor diffusion of the chelated dye through the relatively thick titanium dioxide reflecting layer. The data further illustrates that the polymer was effective in giving up the coppar ion to complex with the dye presumably via a ligand exchange ($\lambda_{max}$ shifted from 495 to 545 nm and $D_{max}$ was increased).

**Example 9**

Poly(1-vinylimidazole) -co-(1-vinyl-3 -benzylimidazolium chloride)-co-[1-vinyl-3 -(3-aceto-4-hydroxybenzyl)imidazolium chloride]

Poly(1-vinylimidazole) ($10^{-1}$ mole, 9.4 g) was dissolved in methanol (400 ml) and reacted with 3-aceto-4-hydroxybenzyl chloride (2.5 x 10-2 mole, 4.6 g) for 6 hours at the reflux temperature of the mixture. Benzyl chloride (7.5 x 10-2 mole, 9.5 g) was then added and the reaction mixture was left refluxing for another 2 days. The solvent was evaporated down to about 200 ml and the mixture was precipitated into ethyl acetate. The solid was filtered off and dried under vacuum to give about 16 g of a slightly yellow solid.

The resulting poly[1-vinylimidazole-co-1-vinyl-3-benzylimidazolium chloride-co-1-vinyl-3-(3-acato-4-hydroxybenzyl)imidazolium chloride] (9.4 g) was dissolved in water (800 ml) and copper (II) ethylenediamine chloride (3 g) in water (100 ml) was added dropwise. The mixture was left stirring for 30 minutes and then "diafiltered" using a UM2 "Diaflo" dialysis membrane at 3.5 x $10^5$ Pascals. The residue was freeze-dried to give about 12 g of the final product.

The metallized polymer (1.39 g) was dissolved in demineralized water (39.75 ml), 10% aqueous gelatin (6.25 ml), 10% aqueous p-nonylphenoxypolyglycidol (1.5 ml) and 30% methanolic 1,4-butanediol diglycidyl ether (2,5 ml) were added. The mixture was coated onto 0.18 mm thick subbed poly(ethylene terephthalate) transparent film base. During coating, the coating support was held horizontally on a flat bed and the coating mixture was spread over the support using a 0.23 mm undercut blade, giving a coating laydown of about 130 ml/m². Coatings were hardened at 46° C for 7 days.

Strips of the coating were dyed by dipping into a 0.1 weight percent solution of 3-(2-hydroxy-1-naphthylazo)-4-hydroxybenzenesulphonamide dye in a 0.1 N NaOH. The strips were left in the solution long enough (usually 2 minutes) to give a maximum dye optical density of about 2. The strips were then washed with demineralized water and dried at room temperature.

Sample strips of the coating were also dyed by laminating to coatings of the above dye in gelatin (prepared as described below) using a thickened alkaline processing solution (40 g/l NaOH, 28 g/l

* The $CuSO_4$ $H_20$ was coated in a separate step on top of the wet polymer (Example 1) layer. hydroxyethyl cellulose). The laminates were peeled apart after 5 minutes and the separated layers washed in demineralized water and dried.

The light stability of the above dyed strips was considerably improved compared with similar control strips containing unmetallized mordant.

The dye in gelatin was coated to give a dye laydown of 0.27 g/m². The dye dispersion was prepared by mixing a solution of the dye (1 g) in cyclohexanone (25 ml) and dimethylformamide (10 ml) with a 4.2% aqueous gelatin solution (378 g) containing the surfactant isopropylnaphthalenesulphonate (1 g). The mixture was agitated ultrasonically and finally diluted with water to 400 ml.

**Example 10**

Reaction of latex containing reactive pendant groups with chelating reagents

Part A - Preparation of reactive latex

To a 2-liter, 4-neck flask was charged 1000 ml of distilled water. The water was heated to 90°C and stirred under a nitrogen purge for 20 minutes, then cooled to 60°C. To the water was added 6.0 g of Triton X-100 (trade mark), 10.0 g of sodium styrenesulfonate, 189 g of vinylbenzyl chloride and 1.0 g of divinylbenzene. The mixture was stirred rapidly under nitrogen for 10 minutes, after which 2.0 g of $(NH_4)_2S_2O_8$ was added. Stirring was continued for 4 hours at 60°C, after which an additional 0.5 g of $(NH_4)_2S_2O_8$ and 0.3 g of $Na_2S_2O_5$ were added and the temperature increased to 90°C for 1.5 hours. After cooling, the latex was filtered and dialyzed against distilled water.

Part B - Reaction of reactive latex with chelating group

A 100 g sample of poly(vinylbenzyl chloride-co-divinylbenzene-co-sodium styrenesulfonate) (weight ratio 94.5/0.5/5) from Part A was treated with one equivalent (based upon vinylbenzyl chloride) of disodium iminodiacetic acid dissolved in 75 ml of water. The mixture was stirred for 48 hours at pH = 10, then dialyzed against distilled water for 6 hours.

Part C - Metallization of chelating latex

To a 50 g sample of the material prepared in Part B was added a solution of 12.3 g of $Ni(NO_3)_2.6H_20$ in 25 ml of water.The mixture was stirred for 1 hour, then dialyzed for 18 hours against distilled water.

**Example II**

An image-receiving element was prepared by coating a transparent poly(ethyleneterephthalate) film support with:

1) a layer containing gelatin at 1.08 g/m$^2$ and $NiSO_4.6H_20$ at 0.58 g/m$^2$.

2) a layer containing gelatin at 2.16 g/m$^2$ and a partially-quaternized polyvinyl imidazole copolymer at 3,24 g/m$^2$ having the structure:

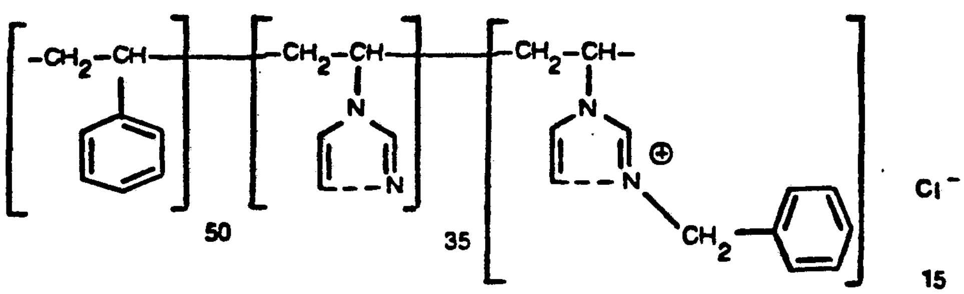

3) a reflecting layer containing titanium dioxide at 16.2 g/m$^2$ and gelatin at 2.5 g/m$^2$:

4) an overcoat layer containing gelatin at 0.54 g/m$^2$ and bisvinylsulfonylmethyl ether at 2.0 weight percent of the total gelatin.

A sample of the receiver element prepared above was analyzed for nickel by x-ray fluorescence then washed in water for 1 hour and reanalyzed. The results indicated the receiver was effective in retaining the nickel ion.

A second sample of the receiver was evaluated in a color image transfer process by laminating to an imagewise exposed, single-color photographic element and spreading a viscous processing composition there between.

The photographic element contained a ballasted dye-providing compound which released a metallizable magenta dye having the structure:

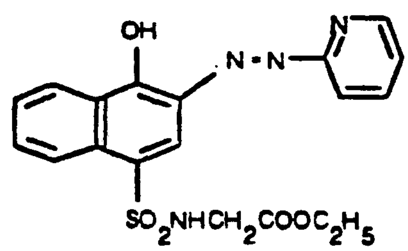

After 2 minutes, the elements were separated and the receiver was washed in water and dried to reveal a well-defined magenta dye image From the light absorption data obtained from the dye image, it was apparent that said dye had complexed with the nickel present in the receiver.

**Example 12**

Image-receiving elements as identified below were prepared and tested exactly as described in Example 7:

Receiver 1 - Like Receiver B of Example 7 except that a well known metal complexing agent, the disodium salt of ethylenediaminetetraacetic acid (ETDA) was added to the coating composition so as to provide EDTA at 0.74 g/m$^2$ in the dye mordant layer:

Receiver II - Like Receiver B of Example 7 except that another well known metal complexing agent, 8-hydroxy-5-quinolinesulfonic acid was added so as to provide 0.45 g/m$^2$ in the dye mordant layer.

After testing as described in Example 7, the following diffusion data were obtained.

| | Receiver | %$D_{max}$ 30" | 60" | 120" | $D_{max}$ |
|---|---|---|---|---|---|
| A | (Example 7) | 46 | 70 | 89 | 1.40 |
| B | (Example 7) | 23 | 40 | 55 | 1.77 |
| I | | 7 | 17 | 36 | 1.78 |
| II | | 34 | 55 | 72 | 1.48 |

It is apparent from these data that the presence of $CuSO_4$ (Receiver B) and the Cu/EDTA complex (Receiver I) substantially inhibit the diffusion of dye. In fact. said inhibition was substantially greater with the Cu/EDTA complex than with the uncomplexed copper. With Receiver II, (copper complexed with 8-hydroxyquinoline) an improvement in dye diffusion was observed: however, an intense yellow stainwas present due to the highly colored complex. In contrast to these results, the use of the polymer containing coordinating groups as described in Example 8 resulted in no color stain and little or no dye wandering.

**Example 13**

A series of polymer-containing coatings were prepared by coating poly(ethylene terephthalate) film supports as described below.

Coating 1 - A two-layer coating containing

(1) a first (bottom) layer comprising gelatin at 1.08 g/m$^2$ and nickel sulfate at 0.63 g/m$^2$ and

(2) a top layer comprising gelatin at 2.16 g/m$^2$ and carboxymethyl cellulose (CMC) 2.16 g/m$^2$.

Coating 2 - A single-layer coating comprising gelatin at 2.16 g/m$^2$ and carboxymethyl cellulose at 2.16 g/m$^2$.

Coating 3 - A single-layer coating comprising gelatin at 2.16 g/m$^2$ and cellulose acetate hydrogen phthalate (CA) at 2.16 g/m$^2$.

Coating 4 - A two-layer coating containing

(1) a bottom layer comprising gelatin at 1.08 g/m$^2$ and nickel sulfate at 0.63 g/m$^2$ and

(2) a top layer comprising gelatin at 2.16 g/m$^2$ and cellulose acetate hydrogen phthalate at 2.16 g/m2.

Coating 5 - A single-layer coating comprising gelatin at 2.16 g/m$^2$ and poly(4-vinylpyridine-co-vinylbenzyliminodiacetic acid) (weight ratio 1:1) VBA at 3.51 g/m$^2$.

Coating 6 - A two-layer coating containing

(1) a bottom layer comprising gelatin at 1.08 g/m$^2$ and nickel sulfate at 0.58 g/m$^2$ and

(2) a top layer comprising gelatin at 2.16 g/m$^2$ and VA at 3.51 g/m$^2$

A thin overcoat layer comprising gelatin and bisvinylsulfonylmethyl ether at 2% by weight of the total gelatin was also applied to all coatings.

To test retention of nickel ion by the polymeric coatings prepared above, separated samples of these coatings were laminated to each other as indicated in the following table. Viscous solution comprising a pH 5.0 buffer and carboxymethyl cellulose as a thickener was spread between the layers of each laminate. After 24 hours at room temperature, the samples were separated, washed, dried and then analyzed for nickel. The results were recorded in the following table.

TABLE II

| Laminate | Coating | Ni | Coating | Ni |
|---|---|---|---|---|
| Coatings 1 and 5 | 1 | 5.4 | 5 | 124 |
| Coatings 2 and 6 | 2 | 5.4 | 6 | 120 |
| Coatings 3 and 6 | 3 | 5.4 | 6 | 118 |
| Coatings 4 and 5 | 4 | 5.4 | 5 | 136 |

These data show that the Ni is retained far more strongly by the VBA of the present invention than by either the CMC or the CA. Even when Ni is initially coated under the CMC or CA, it migrates to the VBA layer.

**Example 14**

Poly(acrylamide-co-N-vinylbenzyliminodiacetic acid disodium salt) (80:20)

A slurry of 10 g of N-vinylbenzyliminodiacetic acid in 350 ml of water was adjusted to pH 5.5 by the addition of 50 percent sodium hydroxide solution. To the resultant solution was added 100 ml of ethanol, 40 g of acrylamide, and 250 mg of potassium persulfate. The reaction was then flushed with nitrogen and heated at 60°C overnight.The viscous polymer solution was diluted with 835 ml of water, and one-third was dialyzed overnight. The dialysate was freeze-dried to yield 16 g of product.

Anal. Found: C, 47.1; H, 6.6: N, 14.8

$[\eta]_{0.1\ N\ NaCl}$ = 1.31 measured at 25°C.

To another one-third portion of the above crude polymer solution (13.4 meq chelate sites) was added dropwise 13.4 ml of 1N nickel (II) chloride which had been diluted to 40 ml with water. A polymeric chelate separated in the form of a dispersion. The particle size of the nickel chelate dispersion was less than 1 µm. The dispersion was dialyzed overnight to remove uncomplexed nickel. The purified dispersion was found to contain 6.2 mg of nickel per ml of solution at 6.1 percent solids.

**Example 15**

Poly(sodium 2-sulfoethyl methacrylate-co-N-vinylbenzyliminodiacetic acid nickel(II) chelate) $(1:1)_w$

A slurry of 40 g of N-vinylbenzyliminodiacetic acid in 720 ml of water was adjusted to pH 5.5 by the addition of 50 percent sodium hydroxide solution. To the resultant solution was added 44.6 g of sodium 2-sulfoethyl methacrylate and 800 mg of potassium persulfate. The reaction vessel was purged with nitrogen and the solution was stirred at 60°C overnight. The polymer mixture was diluted with 1340 ml of water and a solution of 162 ml of 1N nickel (II) chloride solution that had been diluted to 535 ml with water was added dropwise. A soluble, light-green polymeric chelate was formed. The solution was dialyzed overnight to remove uncomplexed nickel ions and was then concentrated to 7.6 percent solids on the rotary evaporator. It was determined by atomic absorption spectroscopy that the sample contained 7.04 mg of nickel per ml of solution.

**Example 16**

Polymers in a Color Image Transfer Film Unit

A series of six photographic single-color, integral imaging-receiver elements were prepared by coating the following layers successively on a polyester film support:

1 and 2) a receiving layer combination comprised of a mordant layer and a metal-chelating polymer layer as described below;

3) a reflecting layer comprising titanium dioxide and gelatin;

4) an opaque layer of carbon dispersed in gelatin;

5) a layer comprising gelatin and a dispersion of the dye-releasing Compound A*;

6) a layer of green-sensitive internal image emulsion, as described in U.S. Patent 3.761.276 (1.35 g/m² Ag. 1.35 g/m² gelatin). with fogging agents of element 49 of U.S. Patent 4.030,925. and 5-octadecylhydroquinone-2-sulfonic acid (16 g/mole Ag);

7) a layer of didodecylhydroquinone (1.29 g/m²) dispersed in gelatin (1.61 g/m²); and

8) a gelatin overcoat layer.

* Compound A

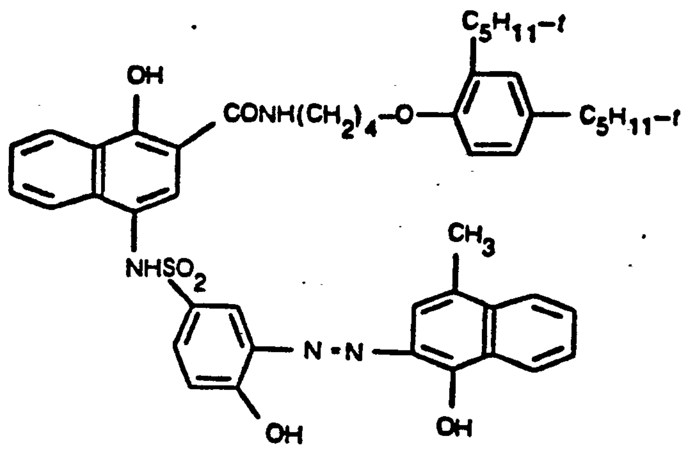

The six receiving layer combinations had varying mordant composition and varying location of the chelating polymer layer relative to the mordant layer.

The metal-chelating polymer layers comprise:

Ch-1: Poly(2-sulfoethyl methacrylate, sodium salt-co-N-vinylbenzyliminodiacetic acid) (50/50) (1.40 g/m$^2$) converted to the chelate by the addition of nickel sulfate hexahydrate (0.58 g/m$^2$);

Ch-2: Same as Ch-1, except containing additionally a swellable hydrophilic colloid.

The mordant layers comprise either a cationic mordant (CAT) or poly(4-vinylpyridine) (P4VP).

CAT: A mixture of poly(styrene-co-N-benzyl-N,N-dimethyl-N-vinylbenzylammonium sulfate-codivinylbenzene) (49/49/2) and gelatin, each at 2.28 g/m$^2$.

P4VP: A mixture of poly(4-vinylpyridine) and gelatin, each at 2.15 g/m$^2$.

The six receiving layer combinations are described along with data obtained from the processed elements in the following Table III.

Each of these integral elements was exposed through a graduated density scale, then processed by spreading between it and a processing cover sheet, at 22°C, a viscous processing composition (as described in U.S, Patent 4,061,496) by passing the transfer"sandwich" between a pair of juxtaposed rollers so that the liquid layer was about 75 µm.

The light stability was measured by exposing half of a scale-exposed and processed laminate (at least 24 hours after lamination) to a 40-day SANS (simulated average northern skylight) irradiation fading (500 footcandles) test, the other half being covered. Sensitometric curves are plotted from each half and the green optical density loss, on fading at the place on the curve where the original density is 1.0, was determined. The light stability in all of the experiments containing metal ion is substantially improved over that of the control with no chelating polymer.

TABLE III

| Example | Layer 1 (bottom) | Layer 2 (top) | $D_{max}$ | $D_{min}$ | Light Stability (loss on 40-day SANS) | $\lambda_{max}$ of Day After 6 min | $\lambda_{max}$ of Day After 24 hr |
|---|---|---|---|---|---|---|---|
| Control (no metal ion) | CAT | None | 1.55 | 0.21 | −0.56 | 580 | 533 |
| 16A | CAT | Ch—1 | 1.14 | 0.20 | −0.14 | 528 | 537 |
| 16B | CAT | Ch—2 | 1.27 | 0.20 | −0.07 | 538 | 537 |
| 16C | Ch—2 | CAT | 1.64 | 0.21 | −0.06 | 578 | 535 |
| 16D | P4VP | Ch—2 | 1.64 | 0.27 | −0.02 | 535—565 | 535—562 |
| 16E | Ch—2 | P4VP | 2.21 | 0.26 | −0.01 | 565, 535sh | 565, 535sh |

A separate set of samples of the unexposed coatings (which develop to $D_{max}$ because of the direct-positive process) were processed as above and scanned successively with a spectrophotometer at various time intervals after lamination. The $\lambda_{max}$ values of the spectra in the 6-minute and 24-hour scans are also shown in Table III.

In the Control the uncomplexed dye after 6-minutes (still high pH) is blue-violet with λ at 580 nm at the pH of the laminate. By 24 $hours_{max}$ the pH has dropped to 4 or 5, and the uncomplexed dye has a $\lambda_{max}$ of about 533 nm.

The low $\lambda_{max}$ at the high pH of Examples 16A and 16B containing the chelating polymer layers on top indicate that the dye is complexed by the metal. In Example 16C the dye on the mordant layer appears initially not to be chelated at the high pH The "flat-topped" or double-banded spectra $\lambda_{max}$ = 535 to 565 nm obtained in Experiments 16D and 16E at both pH conditions, are probably characteristic of a stable nickel chelate of the dye in which the pyridine nitrogen of the mordant acts as a ligand. The polymer thus yields the metal ion to the dye to form the complex of the dye, metal and mordant together.

Coupled with the marked increase in dye stability in those coatings containing metal ion, the spectrophotometric data tend to show that the dye is substantially complexed at the lower pH reached after 24 hours.

**Example 17**

Poly {(1-vinylimidazole)-co-(1-vinyl-3-benzylimidazolium chloride)-co-[1-vinyl-3-(3-aceto-4-hydroxybenzyl)imidazolium chloride]}

Poly(1-vinylimidazolel ($10^{-1}$ mole, 9.4 g) was dissolved in methanol (400 ml) and reacted with 3-aceto-4-hydroxybenzyl chloride (2.5 x $10^{-2}$ mole, 4.6 g) for 6 hours at the reflux temperature of the mixture. Benzyl chloride (7.5 x 10-2 mole. 9.5 g) was then added and the reaction mixture was left refluxing for another two days. The solvent was evaporated down to about 200 ml and the mixture was precipitated into ethyl acetate. The solid was filtered off and dried under vacuum to give about 16 g of a slightly yellow solid.

Preparation of 3-formyl-4-hydroxybenzyl chloride and 3-aceto-4-hydroxybenzyl chloride

The compound was prepared by a modified procedure of Stoermer and Behn (R. Stoermer and K. Behn. Ber., 34 [1901], 2455). A 500-ml. three-neck flask equipped with a stirrer thermometer and a gas inlet was charged with salicylaldehyde (61 g), formaldehyde (40 percent aqueous solution. 41 g) and hydrochloric acid (32 weight percent, 60 g). HCl gas was passed into the reaction mixture for 20 hours while the temperature was maintained below 30°C. The resulting dark purple reaction mixture was then treated with hot water (3 x 200 ml) to remove the unreacted paraformaldehyde. The crude product was sublimed at 100°/1 mm to give 34 g of white 3-formyl-4-hydroxybenzyl chloride (40 percent yield in salicylaldehyde), m.p. 90°C.

$C_6H_7ClO_2$ requires (percent):
C, 56.31; H, 4.14; C1, 20.82
Found: C, 56.33; H, 4.17; Cl, 20.85

Similarly, 3-acetyl-4-hydroxybenzyl chloride was prepared by chloromethylating o-hydroxyacetophenone.

$C_9H_9ClO_2$ requires (percent):
C, 58.60; H, 4.93: Cl, 19.20
Found: C. 58.52; H, 4.94: Cl. 19.40

**Example 18**

Poly {(-vinylimidazole)-co-(1-vinyl-3-benzylimidazolium chloride)-co-[1-vinyl-3-(3 -aceto-4-hydroxybenzyl copper (II) ethyienediamine)-imidazolium chloride]}

Poly(1-vinylimidazole)-co-(1-vinyl-3-benzylimidazolium chloride)-co-[1-vinyl-3-(3-aceto-4 -hydroxybenzyl)-imidazolium chloride] (9.4 g) was dissolved in water (800 ml) and copper (II) ethylenediamine chloride (3 g) in water (100 ml) was added dropwise. The mixture was left stirring for 30 minutes and then "diafiltered" using a UM2 -'Diaflo-' membrane at 3.5 x $10^5$ Pascals. The residue was freeze-dried to give about 12 g of the final product. "Diaflo" is a trademark of the Amicon Corporation.

Preparation of ethylenediamine copper (II) chloride

$CuCl_2.2H_20$ (17 g) was dissolved in water (100 ml) and ethylenediamine (6 g) was added dropwise. The reaction mixture was poured into acetone (500 ml) and the resulting precipitate was filtered off and dried to give a light blue powder (19 g).

$C_2H_8Cl_2CuN_2$ requires (percent):
C, 12.34; H.4.16; Cl, 36.40: N, 14.40: Cu, 32.60
Found: C, 12,18 H,4,06; Cl, 35.25; N, 14.46; Cu. 31.30

**Example 19**

The metallized polymer of Example 18 (1.39) was dissolved in demineralized water (39.75 ml). 10 percent aqueous gelatin (6.25 ml). 10 percent aqueous p-nonylphenoxypolyglycidol (1.5 ml) and 30 percent methanolic 1,4-butanediol diglycidyl ether (2.5 ml) were added. The mixture was coated onto 0.18 mm thick subbed poly(ethylene terephthalate) transparent film base. During coating. the coating support was held horizontally on a flat bed and the coating mixture was spread over the suppon using a 0.23 mm undercut blade, giving a coating laydown of about 1.2 ml/m$^2$.

Coatings were hardened at 46° C for 7 days.

**Example 20**

Strips of the coatings of Example 19 were dyed by dipping into a 0.1 weight percent solution of 3-(2-hydroxy-1-naphthylazo)-4-hydroxybenzenesulphonamide dye in 0.1 N NaOH. The strips were left in the solution for about 2 minutes to give a maximum dye optical density of about 2. The strips were then washed with demineralized water and dried at room temperature.

Sample strips of the coating were also dyed by laminating to coatings of the above dye in gelatin (prepared as described below using a thickened alkaline processing solution (40 g/l NaOH. 28 g/l hydroxyethylcellulose). The laminates were peeled apart after 5 minutes and the separated layers washed in demineralized water and dried.

The light stability of the above dyed strips was considerably improved, compared with similar control strips containing umetallized mordant.

The dye in gelatin was coated to give a dye laydown of 2.5 mg/m$^2$. The dye dispersion was prepared by mixing a solution of the dye (1 g) in cyclohexanone (25 ml) and dimethylformamide (10 ml) with a 4.2 percent aqueous gelatin solution (378 g) containing the surfactant isopropylnaphthalenesulphonate (1 g). The mixture was agitated ultrasonically and finally diluted with water to 400 ml.

**Example 21**

Preparation 1 - Poly(styrene-co-1 -vinylimidazole)

A mixture of 1-vinylimidazole (37 6 g 04 mole) and styrene (4,16 g 0.4 mole) was treated with 0.4 g of 2,2'-azobis (2-methylpropionitrile) (AIBN) and kept at 75 -80° C under nitrogen overnight. The formed polymer was dissolved in acetone and precipitated from solution with diethyl ether, filtered, washed and dried. The polymer had an inherent viscosity of 0.23 in acetone.

Yield: 27.0 g.

Analysis calculated for a 3:1 mole ratio:

C, 86.0; H, 7.4: N, 6.9

Found: C, 83.2; H, 7.6; N, 6.7

**Example 22**

Prepararion 2 - Poly(methyl methacrylate-co-1-vinylimidazole)

A mixture of 1-vinylimidazole (38.0 g. 0.4 mole) and methyl methacrylate (40.0 g, 0.4 mole) in dimethyl sulfoxide (DMSO. 240 ml) was treated with AIBN (0.8 g) and kept at 60--65° C under nitrogen. After three hours, additional DMSO (100 ml) was added and the solution was heated at 60--65° C overnight. The formed polymer was precipitated from solution with diethyl ether, filtered, and dissolved in DMF at 12.0 percent solids.

Yield: 71 g.

**Example 23**

Preparation 3 - Poly(butyl acrylate-co-1-vinylimidazole)

A mixture of 1-vinylimidazole (19.0 g. 0.2 mole) and butyl acrylate (25.8 g. 0.2 mole) in DMSO (290 ml) was treated with AIBN (0.4 g) and kept at 60-65° C under nitrogen overnight. The formed Polymer was precipitated from solution with diethyl ether, filtered, and dissolved in N,N-dimethylformamide (DMF) at 12.1 percent solids.

Yield: 38 g.

**Example 24**

Preparation 4 - Poly(benzyl methacrylate-co-1 -vinylimidazole)

A mixture of 1-vinylimidazole (19.0 g, 0.2 mole) and benzyl methacrylate (35.0 g. 0.2 mole) in DMSO (140 ml) was treated with AIBN (0.4 g) and kept at 60-65°C under nitrogen overnight. The formed polymer was precipitated from solution with water, filtered, washed. dried in a vacuum oven at 40-50°C. The polymer had an inherent viscosity of 0.28 in DMF.

Yield: 57 g

Analysis calculated for a 1:1 mole ratio:

C, 71.1; H, 6.7; N, 10.4

Found: C, 70.3; H, 6.9; N, 7.1.

**Example 25**

Preparation 5 - Poly(benzyl acrylate-co-1-vinylimidazole)

This polymer was prepared as above from 1-vinyl-imidazole (19.0 g. 0.2 mole). benzyl acrylate (32.0 g. 0.2 mole), AIBN (0.4 g) in DMSO (140 ml). The polymer had an inherent viscosity of 0.6 in DMF.

Yield: 46 g.

Analysis calculated for a 1:1 mole ratio:

C, 70.3; H, 6.3; N, 10.9

Found: C, 69.8; H, 6.9; N, 9.1.

**Example 26**

Preparation 6 - Poly(vinylbenzyl alcohol-co-1-vinylimidazole)

A mixture of 1-vinylimidazole (57.0 g, 0.6 mole) and vinylbenzyl alcohol (40.2 g. 0.3 mole) in DMF (10 ml) was treated with AIBN (0.9 g) and kept at 60-65°C under nitrogen. After eight hours. additional DMF (50 ml) was added and heating was continued at 60-65°C overnight. The formed polymer was precipitated from solution with water, filtered, washed, and dried. The polymer had an inherent viscosity of 0,16 in DMF.

Yield: 65 g.

Analysis calculated for 1:1 copolymer:

C, 73.7; H, 7.1; N, 12.3

Found: C, 73.0; H, 8.2; N, 11.1

**Example 27**

Quaternization:

Polymers prepared as described above were quaternized by the following general procedure for quatemization of copolymers of 1-vinylimidazole. A solution of about 25 percent of imidazole polymer in DMF was treated with the stoichiometric amount of an appropriate organic halide required to give the desired degree of quatemization. and heated at 80-90°C under nitrogen overnight. The polymer was isolated by precipitation in ethyl acetate, filtered, washed, and dried. The results are summarized in Table VI:

TABLE IV

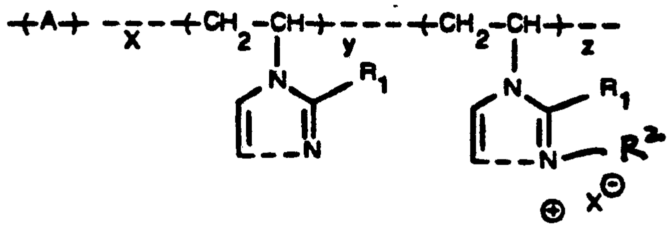

| Polymer No. | A | $R_1$ | $R_2$ | $X^\ominus$ | Mole Percent x | y | z |
|---|---|---|---|---|---|---|---|
| 1 | styrene | H | $C_6H_5CH_2$ | Cl | 75 | 0 | 25 |
| 2 | styrene | H | $C_6H_{13}$ | Br | 75 | 0 | 25 |
| 3 | styrene | H | $C_6H_{56}CH_2$ | Cl | 60 | 30 | 10 |
| 4 | styrene | $CH_3$ | $C_6H_5CH_2$ | Cl | 50 | 37.5 | 12.5 |
| 5 | styrene | H | $C_6H_5CH_2$ | Cl | 60 | 28 | 12 |
| 6 | styrene | H | $C_6H_5CH_2$ | Cl | 60 | 26 | 14 |
| 7 | styrene | H | $C_6H_5CH_2$ | Cl | 60 | 35 | 5 |
| 8 | styrene | H | $C_6H_5CH_2$ | Cl | 50 | 44 | 6 |
| 9 | methyl methacrylate | H | $C_6H_5CH_2$ | Cl | 50 | 37.5 | 12.5 |
| 10 | methyl methacrylate | H | $C_6H_5CH_2$ | Cl | 33 | 50 | 17 |
| 11 | butyl acrylate | H | $C_6H_5CH_2$ | Cl | 50 | 37.5 | 12.5 |
| 12 | styrene | H | 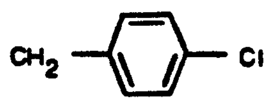 | Cl | 60 | 30 | 10 |
| 13 | styrene | H | $C_6H_{13}$ | Br | 60 | 30 | 10 |
| 14 | styrene | H | $CH_3$ | $CH_3SO_4$ | 60 | 30 | 10 |
| 15 | styrene | H | $CH_3$ | 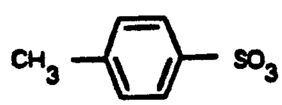 | 60 | 30 | 10 |
| 16 | styrene | H | $CH_2CH_2OH$ | Cl | 60 | 30 | 10 |
| 17 | styrene | H | $C_6H_5CH_2$ | Cl | 50 | 35 | 15 |
| 18 | benzyl methacrylate | H | $C_6H_5CH_2$ | Cl | 50 | 40 | 10 |
| 19 | benzyl acrylate | H | $C_6H_5CH_2$ | Cl | 50 | 40 | 10 |
| 20 | styrene | H | $C_6H_{13}$ | Br | 50 | 35 | 15 |
| 21 | styrene | H | $C_6H_{13}$ | Br | 50 | 40 | 10 |
| 22 | styrene | H | $CH_2CH_2OH$ | Cl | 50 | 35 | 15 |

TABLE IV (cont.)

| Polymer No. | A | $R_1$ | $R_2$ | $X^{\ominus}$ | Mole Percent x | y | z |
|---|---|---|---|---|---|---|---|
| 23 | styrene | H | $CH_2CH_2OH$ | Cl | 50 | 40 | 10 |
| 24 | styrene | H | $C_6H_5CH_2$ | Cl | 50 | 40 | 10 |
| 25 | 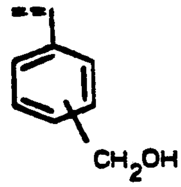 | H | $C_6H_5CH_2$ | Cl | 60 | 30 | 10 |
| 26 | 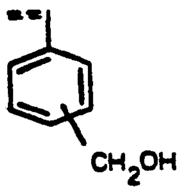 | H | $C_6H_5CH_2$ | Cl | 50 | 40 | 10 |
| 27 | styrene | H | $C_6H_5CH_2$ | Cl | 40 | 52.5 | 7.5 |
| 28 | styrene | H | $C_6H_5CH_2$ | Cl | 40 | 45 | 15 |

**Examples 28-32**

Image-receiving elements according to the invention were prepared by coating a transparent poly(ethyleneterephthalate) film support with:
1) a layer containing gelatin at 1.08 g/$m^2$ and $NiSO_4.6H_20$ at 0.58 g/$m^2$;,
2) a mordant layer containing gelatin at 2.16 g/$m^2$ and a polymeric mordant (see Table VII);
3) an overcoat layer containing gelatin at 0.54 g/$m^2$ and bis-vinylsulfonylmethyl ether coated at 2.0 weight percent of total gelatin.

To test for the retention of nickel ion, samples of each receiver element were analyzed for nickel by x-ray fluorescence, then washed in water for one hour and reanalyzed. For comparison, similar alements containing polymers outside the scope of the invention were also tested.

This demonstrates the capability of the polymer to complex with the mobile nickel ion initially coatad in the sublayer, therefore predetermining the effect of said receiver in preventing the unwanted migration of metal ion when incorporated into an integral imaging-receiver color transfer material.

Results are recorded in Table V

TABLE V

| Example | Mordant | Conc. (g/m²) | Ni⁺² Analysis Before Wash (mg/m²) | After Wash (mg/m²) |
|---|---|---|---|---|
| control A | | 2.16 | 125 | 31.3 |
| 31 | Polymer No. 14 | 3.11 | 125 | 49.7 |
| 32 | Polymer No. 16 | 3.26 | 125 | 65.9 |
| 33 | Polymer No. 13 | 3.21 | 125 | 43.2 |
| 34 | Polymer No. 12 | 3.24 | 121 | 41.0 |
| 35 | Polymer No. 27 | 3.24 | 121 | 45.4 |
| Control B | poly(styrene-co-vinylbenzyl chloride-co-N-benzyl-N,N-dimethyl-N-vinylbenzyl ammonium chloride-co-divinylbenzene) | 2.29 | 132 | 5.4 |

From the data presented in Table VII, it is apparent that the receiving layers of the invention are at least as effective in retaining nickel as poly-4-vinyl-pyridine (control A), a complexing mordant known to be highly effective in color image transfer elements. Further, the results obtained with control B (as specified in Table V) coated in polyvinyl alcohol (2.29 g/m²) illustrate that said polymer is ineffective in complexing with nickel.

## Claims

1. Photographic recording material comprising a support having thereon at least one layer containing a photosensitive silver halide emulsion having associated therewith a metallizable dye or metallizable dye forming material; a dya image-receiving layer containing a dye mordant; an alkaline processing composition and means for discharging same within said recording material in contact with said photosensitive layer; a silver halide developing agent; and polyvalent metal ions characterized in that the material contains a polymer other than polyvinyl pyridine which contains a ligand group such that a coordination complex of the polymer with the metal ions has a stability constant of from $10^{10}$ to $10^{18}$ the polymer being located in the mordant layar or a layar adjacent thereto, and tha metal ions being complexed by the polymer or located in a layer adjacent to the polymar layar in which case the polymer layer is located between the metal ions and the metallizable dya or metallizabla dye forming material,

2. Recording material according to claim 1 characterizad in that said polymer comprises heterocyclic tertiary amine groups, preferably a poly(vinylimidazole) group.

3. Recording material according to claim 1 characterized in that said polymer has the formula:

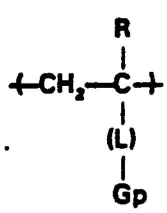

wherein:
R is H, halogen or an alkyl group containing from 1 to 6 carbon atoms:
L is a single bond or a bivalent linking group and
Gp is a group having one of the following formulae:

$—N(CH_2COOM)_2$; 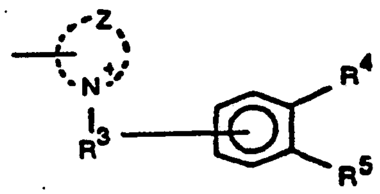 $X^-$;

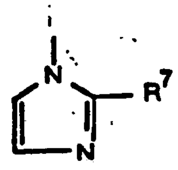 or 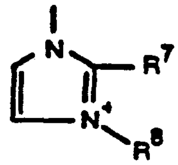 $X^-$

wherein:
M is H, an ammonium cation or an alkali metal ion;
Z represents the atoms necessary to complete a heterocyclic nucleus which may be substituted;
X is an anion;
$R^3$ is a single bond or an alkylene group;
$R^4$ and $R^5$ are chelating groups;
$R^7$ Is hydrogen, alkyl or alkyl substituted with a metal-coordinating group or salts thereof; and
$R^8$ is alkyl or aralkyl either of which may be substituted.

4. Recording material according to claim 3 characterized in that L Is oxy; alkylene of from 1 to 6 carbon atoms; arylene of from 6 to 10 carbon atoms; arylenealkylene of from 7 to 12 carbon atoms; -COOR'- or -CONHR'-, where R'' is alkylene, arylene or arylenealkylene as defined above.

5. Recording material according to claim 3 or 4 characterized in that Z contains 5 to 7 members in the heterocyclic nucleus, $R^3$ is a single bond or alkylene containing from 1 to 4 carbon atoms; and $R^4$ and $R^5$ are each an alkali metal or quaternary ammonium salt, hydroxy, amino, carboxy, sulfonamido$_2$. sulfamoyl, a hydrolyzable ester group having the formula $-OCOR^2$, $-OCOOR^2$, $-OCON(R^2)_2$ or $-COOR^2$ wherein $R^2$ is an alkyl group having from 1 to 4 carbon atoms or an aryl group having from 6 to 8 carbon atoms.

6. Recording material according to claim 5 charactarized in that Z represents the atoms necessary to complete an imidazole, quinoline, Isoquinoline, phenanthridine, phananthroline, pyrimidine, benzothiazole, benzothiadiazole, purine, pyrazine or acridine nucleus.

7. Recording material according to claim 1 characterized in that the polymer comprises units derived from an athylenically unsaturated monomar free of said ligand groups and, optionally, units capable of mordanting the dye ligand or dye ligand forming material.

8. Recording material according to claims 3 or 4 characterized in that the polymer comprises units of the formulae

$-(A^3)-_{x'}$, 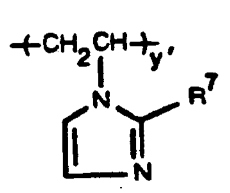 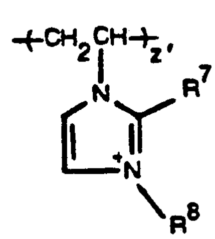 $X^-$

wherein
X, $R^7$ and $R^8$ are as defined in claim 3,
$A^3$ is a unit derived from an ethylenically unsaturated monomer, preferably styrene,
x' is from 10 to 90 percent by weight.
y' is from 10 to 90 percent by weight, and
z' is from 0 to 40 percent by weight.

9. Recording material according to claims 1 to 8 characterized in that said metal ion is $Ni^{+2}$, $Cu^{+2}$ $Co^{+2}$, $Zn^{+2}$, Pt+ $^{+2}$ or $Pd^{+2}$.

10. A photographic material as claimed in any of claims 1- 8 characterized in that said metal ions are complexed by the polymer and the polymer is a mordant for the dye ligand or dye ligand forming material.

11. Photographic recording material comprising a support having thereon at least one layer containing a photosensitive silver halide emulsion having associated therewith a dye or dye forming material: a dye image-receiving layer containing a dye mordant: an alkaline processing composition and means for discharging same within said recording material in contact with said photosensitive layer, and a silver halide developing agent characterized in that there is present either in said dye imagereceiving layer. or in a layer adjacent thereto, a copolymer which comprises a partially quaternized vinyl-imidazole containing recurring units of the formulae:

$-(A^3)_{x'}-$ 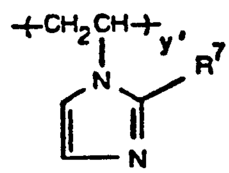 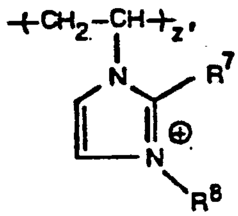 $X^-$

wherein:
X is an anion;
$A^3$ is a unit derived from an ethylenically unsaturated monomer, preferably styrene;
$R^7$ is hydrogen. alkyl or alkyl substituted with a metal coordinating group or salts thereof;
$R^8$ is alkyl or aralkyl either of which may be substituted;
x' is from 10 to 90 percent by weight;
y' is from 10 to 90 percent by weight: and
z' is from 0 to 40 percent by weight
said copolymer being capable of forming a coordination complex with a polyvalent metal ion having a stability constant of from $10^{10}$ to $10^{18}$.

## Revendications

1 - Produit photographique qui comprend un support sur lequel est appliquée au moins une couche qui contient une émulsion photosensible aux halogénures d'argent à laquelle est associé un colorant métallisable ou un composé formateur de colorant métallisable; une couche réceptrice d'image de colorant qui contient un mordant pour les colorants; une composition de traitement basique et des moyens pour libérer cette dernière dans le produit photographique au contact de la dite couche photosensible; un développateur des halogénures d'argent et des ions d'un métal polyvalent, ce produit photographique étant caractérisé en ce qu'il contient un polymère autre que la polyvinyl pyridine qui comprend un coordinat tel que la constante de stabilité du complexe de coordination du polymère avec les ions métalliques est comprise entre $10^{10}$ et $10^{18}$, ce polymère étant situé soit dans la couche de mordant, soit dans une couche adjacente à cette dernière et les ions métalliques étant complexés par le polymère ou situés dans une couche adjacente à la couche qui contient le polymère et, dans ce cas, la couche qui contient le polymère est située entre les ions métalliques et le colorant métallisable ou le composé formateur de colorant métallisable

2 - Produit photographique, conforme à la revendication 1, caractérisé en ce que le dit polymère comprend des groupements amine tertiaire hétérocyclique avantageusement un groupement vinylimidazole.

3 - Produit photographique, conforme à la revendication 1, caractérisé en ce que le dit polymère correspond à la formule suivante:

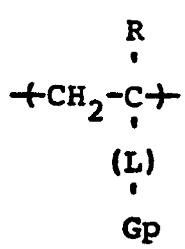

où:
R représente l'hydrogène, un halogène ou un groupe alkyle de 1 à 6 atomes de carbone,
L représente une liaison simple ou un groupement de liaison bivalent, et
Gp représente un groupement correspondant à l'une des formules suivantes:

$-N(CH_2COOM)_2$ ;

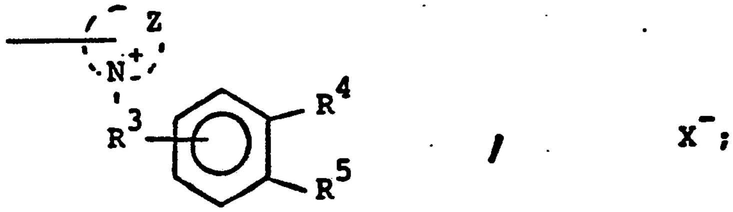

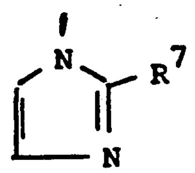

ou

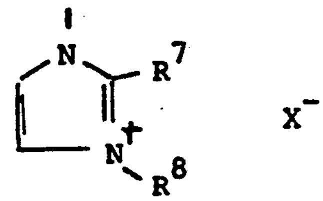

où:

M représente l'hydrogène, un cation ammonium ou un ion de métal alcalin,

Z représente les atomes nécessaires pour compléter un noyau hétérocyclique qui peut être substitué,

X représente un anion,

$R^3$ représente une liaison simple ou un groupe alkylène,

$R^4$ et $R^5$ représentent des groupes de coordination,

$R^7$ représente l'hydrogène, un groupe alkyle ou alkyle substitué par un groupement de coordination d'un métal ou par un sel de ce dernier, et

$R^8$ représente un groupe alkyle ou aralkyle, l'un et l'autre pouvant être substitué.

4 - Produit photographique, conforme à la revendication 3, caractérisé en ce que L représente un groupement oxy, alkylène de 1 à 6 atomes de carbone, arylène de 6 à 10 atomes de carbone, arylènealkylène de 7 à 12 atomes de carbone, le groupement -COOR'- ou -CONHR'-, où R' représente un groupe alkylène, arylène ou arylènealkylène, tel que défini ci-dessus.

5 - Produit photographique, conforme à l'une des revendications 3 ou 4, caractérisé en ce que le groupement Z contient 5 à 7 chaînons dans le noyau hétérocyclique, $R^3$ représente une liaison simple ou un groupe alkylène de 1 à 4 atomes de carbone, et $R^4$ et $R^5$ représentent chacun un sel de métal alcalin ou d'ammonium quaternaire, un groupement hydroxy, amino, carboxy, sulfonamido, sulfamoyle, un groupement ester hydrolysable correspondans à l'une des formules -OCOR, $-OCOOR^2$, $-OCON(R^2)_2$ ou $-COOR^2$ où $R^2$ représente un groupe alkyle de 1 à 4 atomes de carbone ou un groupe aryle de 6 à 8 atomes de carbone.

6 - Produit photographique,conforme à la revendication 5, caractérisé en ce que le groupement Z représente les atomes nécessaires pour compléter un noyau hétérocyclique choisi dans le groupe constitué par les cycles imidazole, quinoléine, isoquinoléine, phénanthridine, phénanthroline, pyrimidine, benzothiazole, benzothiadiazole, purine, pyrazine ou acridine.

7 - Produit photographique, conforme à la revendication 1, caractérisé en ce que le polymère comprend des motifs dérivés d'un monomère à insaturation éthylénique dépourvu de coordinat, et éventuellement, des motifs aptes à mordancer le colorant métallisable ou le composé formateur de colorant métallisable.

8 - Produit photographique, conforme aux revendications 3 ou 4, caractérisé en ce que le polymère comprend des motifs correspondant aux formules suivantes:

$-(A^3)_x-$,

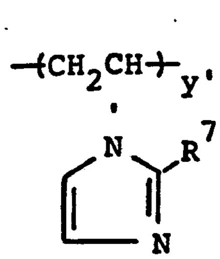

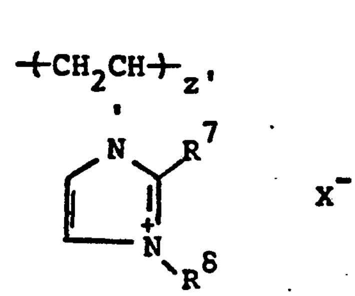

où:
X, $R^7$ et $R^8$ sont tels que définis à la revendication 3,
$A^3$ représente un motif dérivé d'un monomère à insaturation éthylénique, avantageusement un motif dérivé du styrène,
x' représente un pourcentage en masse compris entre 10 et 90,
y' représente un pourcentage en masse compris entre 10 et 90, et
z' représente un pourcentage en masse compris entre 0 et 40.

9 - Produit photographique, conforme à l'une des revendications 1 à 8, caractérisé en ce que le dit ion métallique est choisi dans le groupe constitué par les ions $Ni^{+2}$, $Cu^{+2}$, $Co^{2}$, $Zn^{+2}$, $Pt^{+2}$ et $Pd^{+2}$.

10 - Produit photographique, conforme à l'une quelconque des revendications 1 à 8, caractérisé en ce que les dits ions métalliques sont complexés par le polymère et en ce que le polymère est un mordant pour le colorant métallisable ou pour le composé formateur de colorant métallisable.

11 - Produit photographique comprenant un support sur lequel est appliquée au moins une couche qui contient une émulsion photosensible aux halogénures d'argent à laquelle est associé un colorant ou un composé formateur de colorant; une couche réceptrice d'image de colorant qui contient un mordant pour le colorant; une composition de traitement basique et des moyens pour libérer cette dernière dans le produit photographique, au contact de la couche photosensible; et un développateur des halogénures d'argent, caractérisé en ce qu'il comprend, soit dans la couche réceptrice d'image de colorant, soit dans une couche adjacente à cette dernière, un copolymère qui comprend des motifs vinylimidazole partiellement quaternisés, motifs qui correspondent aux formules suivantes:

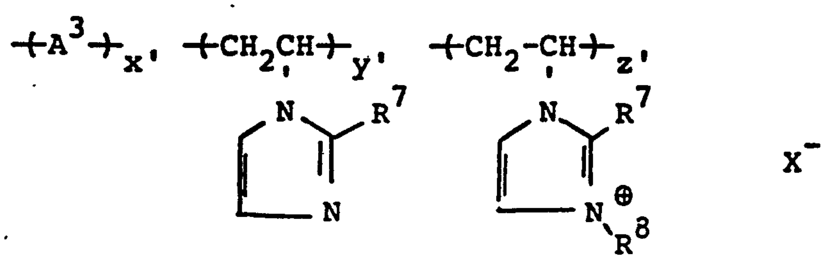

où:
X représente un anion,
$A^3$ représente un motif dérivé d'un monomère à insaturation éthylénique, avantageusement un motif dérivé du styrène,
$R^7$ représente un atome d'hydrogène, un groupe alkyle ou alkyle substitué par un groupe de coordination d'un métal ou un sel de ce dernier,
$R^8$ représente un groupe alkyle ou aralkyle, l'un et l'autre pouvant être substitués,
x' représente un pourcentage en masse de 10 à 90,
y' représente un pourcentage en masse de 10 à 90, et
z' représente un pourcentage en masse de 0 à 40,
ce copolymère étant apte à former un complexe de coordination avec un ion métallique polyvalent dont la constante de stabilité est comprise entre $10^{10}$ et $10^{18}$.

**Patentansprüche**

1. Photographisches Aufzeichnungsmaterial mit einem Träger und mindestens einer hierauf aufgetragenen, eine photosensitive Silberhalogenidemulsion aufweisenden Schicht, der ein metallisierbarer Farbstoff oder ein einen metallisierbaren Farbstoff bildendes Material zugeordnet ist; einer Farbstoffbildempfangsschicht mit einem Farbstoffbeizmittel; einer alkalischen Entwicklermasse und Mitteln zum Verteilen derselben innerhalb des Aufzeichnungsmaterials in Kontakt mit der photosensitiven Schicht; einer Silberhalogenidentwicklerverbindung und mehrwertigen Metallionen, dadurch gekennzeichnet, daß das Material ein von Polyvinylpyridin verschiedenes Polymer enthält, das eine solche Ligandengruppe aufweist, daß ein Koordinationskomplex des Polymeren mit den Metallionen eine Stabilitätskonstante von $10^{10}$ bis $10^{18}$ hat, wobei das Polymer in der Beizmittelschicht oder einer hierzu benachbarten Schicht enthalten ist und die Metallionen durch das Polymer komplex gebunden sind oder in einer Schicht benachbart zur Polymerschicht vorliegen, in welchem Falle sich die Polymerschicht zwischen den Metallionen und dem metallisierbaren Farbstoff oder dem einen metallisierbaren Farbstoff bildenden Material befindet.

2. Aufzeichnungsmaterial nach Anspruch 1, dadurch gekennzeichnet, daß das Polymer heterocyclische tertiäre Amingruppen, vorzugsweise Poly(vinylimidazol)gruppen aufweist.

3. Aufzeichnungsmaterial nach Anspruch 1, dadurch gekennzeichnet, das das Polymer der folgenden Formel entspricht:

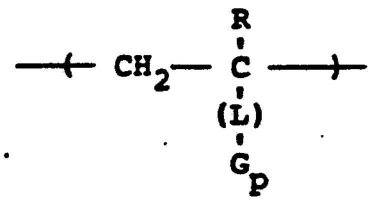

worin bedeuten:
R ein Wasserstoff- oder Halogenatom oder eine Alkylgruppe mit 1 bis 6 Kohlenstoffatomen;
L eine einfache Bindung oder ein bivalentes Bindeglied und
G eine Gruppe einer der folgenden Formeln:

$$-N(CH_2COOM)_2;$$

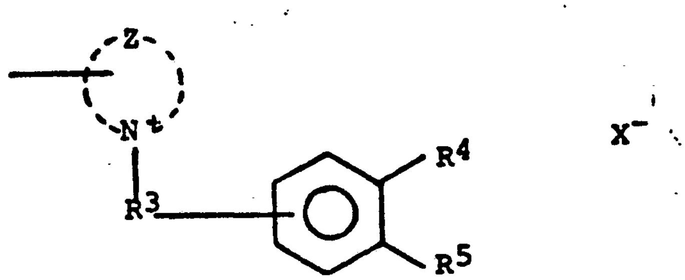

;

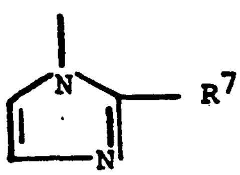

oder

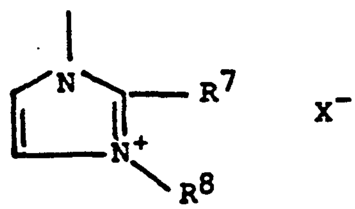

worin bedeuten:
M ein Wasserstoffatom, ein Ammoniumkation oder ein Alkalimetallion;
Z die zur Vervollständigung eines gegebenenfallss substituierten heterocyclischen Kernes erforderlichen Atome;
X ein Anion;
$R^3$ eine einfache Bindung oder eine Alkylengruppe;
$R^4$ und $R^5$ Chelat-bildende Gruppen;
$R^7$ ein Wasserstoffatom, eine Alkylgruppe oder eine durch eine Metall-koordinierende Gruppe substituierte Alkylgruppe oder Salze hiervon und
$R^8$ eine Alkyl- oder Aralkylgruppe, die jeweils substituiert sein kann.

4. Aufzeichnungsmaterial nach Anspruch 3, dadurch gekennzeichnet, daß L steht für: eine Oxygruppe; eine Alkylengruppe mit 1 bis 6 Kohlenstoffatomen; eine Arylengruppe mit 6 bis 10 Kohlenstoffatomen; eine Arylenalkylengruppe mit 7 bis 12 Kohlenstoffatomen; eine Gruppe der Formeln -COOR'- oder -CONHR'-, worin R' für einen Alkylen-, Arylen- oder Arylenalkylenrest der oben angegebenen Definition steht.

5. Aufzeichnungsmaterial nach Anspruch 3 oder 4, dadurch gekennzeichnet, daß Z für die zur Vervollständigung eines 5 bis 7-gliedrigen heterocyclischen Kernes erforderlichen Atome steht, $R^3$ eine einfache Bindung oder einen Alkylenrest mit 1 bis 4 Kohlenstoffatomen darstellt und $R^4$ und $R^5$ jeweils stehen für einen Alkalimetall- oder quaternären Ammoniumsalzrest oder einen Hydroxy-, Amino-, Carboxy-, Sulfonamido-, Sulfamoyl- oder eine hydrolysierbare Estergruppe einer der Formeln $-OCOR^2$, -OCOOR2, $-OCON(R^2)2$ oder $-COOR^2$, worin $R^2$ für eine Alkylgruppe mit 1 bis 4 Kohlenstoffatomen oder eine Arylgruppe mit 6 bis 8 Kohlenstoffatomen steht.

6. Aufzeichnungsmaterial nach Anzpruch 5, dadurch gekennzeichnet, daß Z für die zur Vervollständigung eines Imidazol-, Chinolin-, Isochinolin-, phenanthridin-, Phenanthrolin-, Pyrimidin-, Benzothiazol-, Benzothiadiazol-, Purin-, Pyrazin- oder Acridinkernes erforderlichen Atome steht.

7. Aufzeichnungsmaterial nach Anspruch 1, dadurch gekennzeichnet, daß das Polymer Einheiten aufweist, die sich von einem äthylenisch ungesättigten Monomeren ableiten, das frei von Ligandengruppen ist und

gegebenenfalls Einheiten, die den Farbstoffligenden oder das einen Farbstoffligenden bildende Material zu beizen vermögen.

8. Aufzeichnungsmaterial nach Anspruch 3 oder 4, dadurch gekennzeichnet, daß das Polymer Einheiten der folgenden Formeln aufweist:

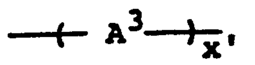

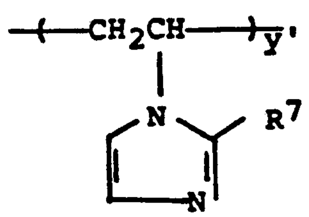

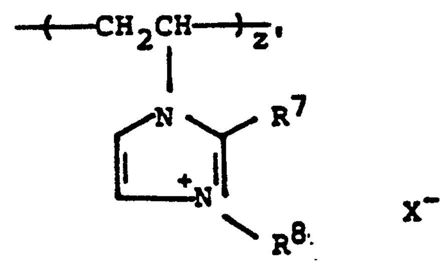

worin X, $R^7$ und $R^8$ die in Anspruch 3 angegebene Bedeutung haben und worin ferner bedeuten:
$A^3$ eine Einheit, die sich von einem äthylenisch ungesättigten Monomeren, vorzugsweise Styrol ableitet,
x' 10 bis 90 Gew.-%,
y' 10 bis 90 Gew.-% und
z' 0 bis 40 Gew.-%.

9. Aufzeichnungsmaterial nach Ansprüchen 1 bis 8, dadurch gekennzeichnet, daß die Metallionen aus $Ni^{12}$, $Cu^{+2}$, $Co^{+2}$ $Zn^{+2}$, $Pt^{+2}$ oder $pd^{+2}$ bestehen.

10. Aufzeichnungsmaterial nach einem der Ansprüche 1 bis 8, dadurch gekennzeichnet, daß die Metallionen durch das Polymer komplex gebunden sind und daß das Polymer ein Beizmittel für den Farbstoffligenden oder das einen Farbstoffligenden bildende Material ist.

11. Photographisches Aufzeichnungsmaterial mit einem Träger und mindestens einer hierauf aufgetragenen, eine photosensitive Silberhalogenidemulsion aufweisenden Schicht, der ein Farbstoff oder ein Farbstoff bildendes Material zugeordnet ist; einer Farbstoffbildempfangsschicht mit einem Farbstoffbeizmittel; einer alkalischen Entwicklermasse sowie Mitteln für die Verteilung der Entwicklermasse innerhalb des Aufzeichnungsmaterials in Kontakt mit der photosensitiven Schicht sowie einer Silberhalogenidentwicklerverbindung, dadurch gekennzeichnet, daß entweder in der Farbstoffbildempfangsschicht oder in einer hierzu benachbarten Schicht ein Copolymer vorliegt, das teilweise quaternärisierte Vinylimidazolreste enthaltende wiederkehrende Einheiten der folgenden Formeln aufweist:

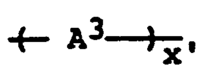

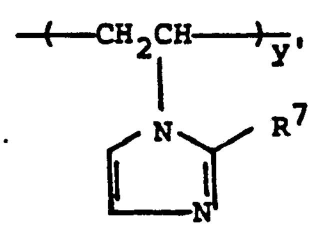

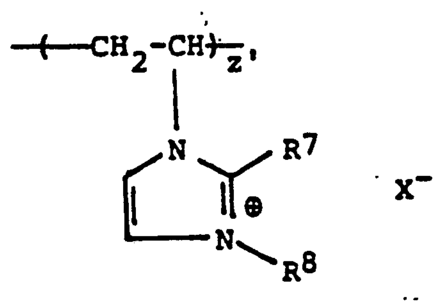

worin bedeuten: X ein Anion;
$A^3$ eine Einheit, die sich von einem äthylenisch ungesättigten Monomeren, vorzugsweise Styrol ableitet;
$R^7$ ein Wasserstoffatom, eine Alkylgruppe oder eine Alkylgruppe, die durch eine Metall-koordinierende Gruppe oder Salze hiervon substituiert ist;
$R^8$ eine Alkyl- oder Aralkylgruppe, die jeweils substituiert sein kann;
x' 10 bis 90 Gew.-%;
y' 10'bis 90 Gew.-% und
z' 0 bis 40 Gew.-%
wobei das Copolymer mit einem mehrwertigen Metallion einen Koordinationskomplex mit einer Stabilitätskonstanten von $10^{10}$ bis $10^{18}$ zu bilden vermag.